(19) Europäisches Patentamt

European Patent Office

Office européen des brevets

(11) EP 0 409 161 B1

(12) EUROPEAN PATENT SPECIFICATION

(45) Date of publication and mention
of the grant of the patent:
**11.10.2000 Bulletin 2000/41**

(51) Int. Cl.7: **H04N 5/235**

(21) Application number: **90113672.1**

(22) Date of filing: **17.07.1990**

(54) **Method and apparatus for controlling exposure changes of a video camera**

Verfahren und Einrichtung zur Steuerung der Belichtungsänderungen einer Videokamera

Méthode et appareil pour commander les changements d'exposition d'une caméra vidéo

(84) Designated Contracting States:
**DE FR GB**

(30) Priority: **18.07.1989 JP 18495189**
**18.07.1989 JP 18495289**
**18.07.1989 JP 18495389**
**31.07.1989 JP 19886889**
**02.08.1989 JP 20073489**
**04.08.1989 JP 20358089**
**04.09.1989 JP 22858889**
**04.09.1989 JP 22858989**

(43) Date of publication of application:
**23.01.1991 Bulletin 1991/04**

(73) Proprietor:
**FUJI PHOTO FILM CO., LTD.**
**Kanagawa-ken (JP)**

(72) Inventors:
• **Arai, Fumihito,**
**c/o Fuji Photo Film Co. Ltd.,**
**Tokyo, (JP)**
• **Mori, Yoshihiko,**
**c/o Fuji Photo Film Co. Ltd.,**
**Tokyo, (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**EP-A- 0 264 685**　　　**EP-A- 0 269 053**
**FR-A- 2 608 881**　　　**US-A- 4 395 099**
**US-A- 4 639 767**　　　**US-A- 4 714 966**

## Description

<u>BACKGROUND OF THE INVENTION</u>

The present invention relates to a method of and apparatus for controlling an exposure of video cameras. More particularly, the invention relates to a method and apparatus for controlling an exposure amount in accordance with a video signal from an image sensor.

A recent video camera has had a built-in exposure control apparatus which automatically regulates the intensity of light incident to an image sensor of CCD or MOS type in accordance with the brightness of a scene. For instance, in an apparatus for automatically adjusting an exposure amount by using a diaphragm (iris diaphragm), the diaphragm is adjusted to an aperture size suitable for a proper exposure amount in accordance with the scene brightness value detected through an averaged brightness measuring, spot brightness measuring, or multi-pattern measuring. Instead of the exposure control by a diaphragm, there is also known controlling a charge accumulation time of an image sensor in accordance with a scene brightness value. With a video camera or a still video camera in a continuous pick-up mode having such an exposure control apparatus, the diaphragm aperture size or the charge accumulation time is controlled so as to quickly follow a change in a scene brightness value, thereby allowing an exposure control quickly responding to a start of picking up a scene or to a change in scene.

Even for the case the same principal subject is continuously picked up, the brightness distribution of a scene may change more or less. For instance, the brightness distribution of a scene changes greatly during panning while a moving principal subject is picked up. In such a case, with a conventional exposure control apparatus having a quick response performance, the diaphragm aperture size or the image sensor charge accumulation time is caused to change frequently, resulting in unnatural exposure control. For instance, in the case of the averaged brightness measuring, although the brightness of a principal subject changes very little, the background brightness considerably changes and the exposure control is executed correspondingly. As a result, the exposure amount of the principal subject changes frequently so that the image of the reproduced principal subject changes in its brightness too often and is very awkward.

Such problems are particularly conspicuous for the case of spot brightness measuring and multi-pattern measuring. For instance, if an image of a principal subject moves away from the spot photometric area at the center of a scene because of tracking with delay the principal subject during panning, or if an abnormal light is incident to the photometric area, the exposure control apparatus responds to it at once to correct the exposure, thereby resulting in a change of the exposure amount of the principal subject irrespective of a continuous scene thereof, and in unnatural exposure control.

There is also known an exposure control method by which a frame is divided into a central area and peripheral area, and one of the center weighted measuring mode or averaged measuring mode is automatically selected to obtain an optimum exposure of, e.g., a rear light scene. With such a two mode switching method and multi-pattern measuring method, the center weighted measuring is selected if the center of a scene is far brighter than the peripheral area. Such a scene has a proper exposure of a principal subject if it is located at the center of the frame, but it becomes under-exposure if it is located at the peripheral area.

<u>OBJECTS OF THE INVENTION</u>

It is therefore an object of the present invention to provide a method and apparatus for controlling an exposure of a video camera so as to suppress an unstable change in the exposure amount of a principal subject caused by a motion of the principal subject or the video camera.

It is another object of the present invention to provide a method and apparatus for controlling an exposure of a video camera without a fear of significant failure in exposure control.

<u>SUMMARY OF THE INVENTION</u>

In order to achieve the above and other objects and advantages of this invention, the speed of exposure control and the exposure amount are determined by taking into account the degree of scene change so that the exposure amount can be smoothly changed. Such exposure control is conducted by adjusting the diaphragm or the image sensor charge accumulation time.

According to a preferred first embodiment of this invention, a scene change is estimated from a change in brightness values of two areas in the scene, and by considering the scene estimation, a high or low speed exposure control is selected. In a second embodiment of this invention, an acceleration sensor is mounted on a video camera, and a high or low speed exposure control is selected in accordance with the motion speed of the video camera detected with the acceleration sensor. In a third embodiment of this invention, the exposure control speed is selected in accordance with the degree of change in the brightness value obtained through the multi-pattern measuring. In a fourth embodiment of this invention, the multi-pattern measuring is executed periodically to determine an equation most frequently selected during a predetermined period, and this determined equation is used for obtaining a multi-pattern measured brightness value and executing the exposure control until the next equation is determined. In a fifth embodiment of this invention, the multi-pattern measuring is executed periodically to obtain a plurality of multi-pattern measured brightness values by using an equation matching the brightness distribution of a scene, and the exposure control is executed by using an average value of multi-pattern measured brightness values obtained during a predetermined time period. In a sixth embodiment of this invention, the multi-pattern measured brightness value is corrected in order to set a proper exposure amount of a principal subject if an abnormal light is present at the center of a frame. In a seventh embodiment of this invention, if a threshold value is smaller than a difference between the overall image averaged brightness value for substantially the overall area of a frame and the multi-pattern measured brightness value, then the overall image averaged brightness value is corrected by an amount within a predetermined value range, and the exposure control is executed by using the corrected overall image averaged brightness value. In a eighth embodiment of this invention, the correction amount is determined by taking into account the previous correction amount, and if the averaged brightness value does not change extraordinarily, the exposure amount is changed stepwise. In a ninth embodiment of this invention, in determining a scene brightness value by weighting the averaged brightness value of each area of a frame, the weighting value is determined by considering the previous weighting value to thereby allow a smooth exposure control.

## BRIEF DESCRIPTION OF THE DRAWINGS

The above objects and advantages of the present invention will become more apparent from the following detailed description when read in connection with the accompanying drawings, in which:

Fig.1 is a block diagram showing an embodiment of this invention wherein changes in brightness value of two areas in a scene are detected to accordingly select the diaphragm control speed in two steps;
Fig.2 illustrates the photometric areas within a scene;
Fig.3 illustrates a change in brightness value;
Fig.4 is a flow chart explaining the operation of the embodiment shown in Fig.1;
Fig.5 is a block diagram showing another embodiment of this invention wherein a difference of changes in brightness values of two areas in a scene is detected to accordingly select the diaphragm control speed in two steps;
Fig.6 is a flow chart explaining the operation of the embodiment shown in Fig.5;
Fig.7 is a block diagram showing an embodiment of this invention wherein a motion of a video camera is detected to accordingly select a diaphragm control speed;
Fig.8 is a flow chart explaining the operation of the embodiment shown in Fig.7;
Fig.9 is a timing chart illustrating the relationship between the motion of a video camera and the diaphragm control speed;
Fig.10 is a block diagram showing an embodiment of this invention wherein the diaphragm control speed is selected in accordance with a change in overall image averaged brightness value;
Fig.11 illustrates areas for divided brightness measuring;
Fig.12 is a flow chart explaining the operation of the embodiment shown in Fig.11;
Figs.13A to 13G illustrate areas selected by scene discrimination;
Fig.14 is a block diagram showing an embodiment of this invention wherein a multi-pattern measured brightness value calculated by using a most frequently selected equation;
Fig.15 is a flow chart explaining the operation of the embodiment shown in Fig.14;
Fig.16 is a timing chart illustrating the operation of determining an equation at a predetermined time interval;
Fig.17 is a timing chart illustrating the operation of determining an equation by checking the frequency of selection of an equation at each measuring;
Fig.18 is a flow chart showing an embodiment of this invention wherein there is calculated an average value of multi-pattern measured brightness values obtained during a predetermined time period, and the exposure control is executed in accordance with the average value;
Fig.19 is a block diagram showing an embodiment of this invention wherein the multi-pattern measured brightness value is corrected by considering the overall image averaged brightness value;
Fig.20 is a flow chart explaining the operation of the embodiment shown in Fig.19;
Fig.21 is a graph showing a correction amount;
Fig.22 illustrates areas for divided brightness measuring;
Fig.23 is a graph showing switching between measuring modes;
Fig.24 is a flow chart explaining the operation of the embodiment of this invention wherein measuring modes are switched;

Fig.25 is a block diagram showing an embodiment of this invention wherein the overall image averaged brightness value is corrected in accordance with a multi-pattern measured brightness value;

Fig.26 is a flow chart explaining the operation of the embodiment shown in Fig.25;

Fig.27 is a graph showing a correction amount;

Fig.28 is a block diagram showing an embodiment of this invention wherein the present correction amount is changed by considering the previous correction amount;

Fig.29 is a flow chart explaining the operation of the embodiment shown in Fig.28;

Fig.30 is a graph showing clipping the correction amount shown in Fig. 29;

Fig. 31 is a time chart showing an example of calculating the correction amount $\_EV_{R2}(i)$ shown in Fig. 29;

Fig. 32 is a flow chart showing a correction amount which is used with an embodiment of this invention wherein the weighting value is gradually changed; and

Fig.33 is a timing chart showing a change in weighting value.

## DETAILED DESCRIPTION OF THE INVENTION

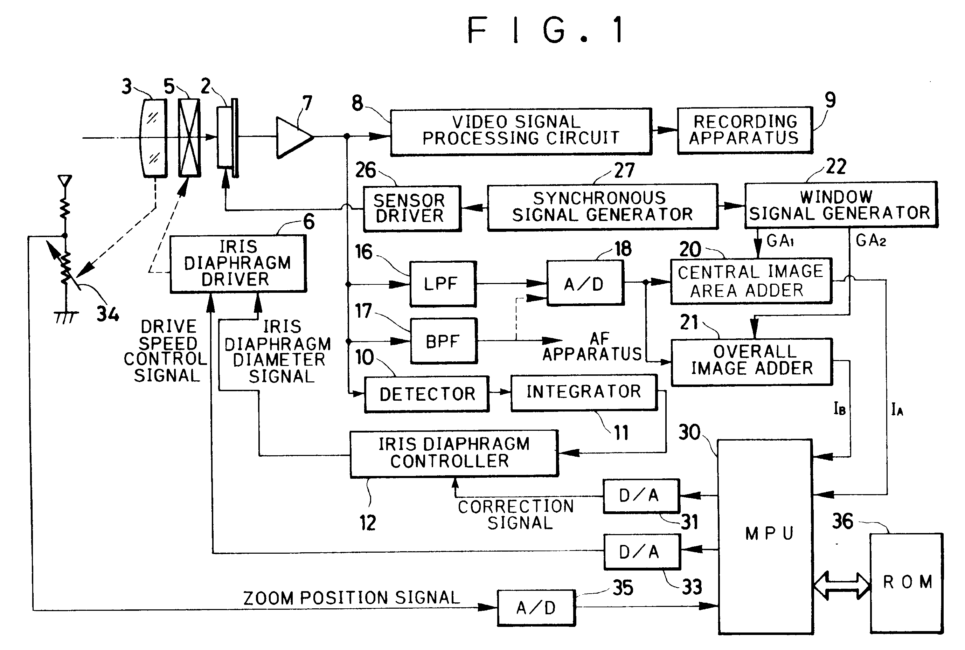

Referring now to Fig.1 showing the outline of the electronic circuit arrangement of a video camera, an image of a scene is formed at the image pickup surface of an image sensor 2 of CCD or MOS type by means of a taking lens 3. Between the taking lens 3 and image sensor 2, there is mounted an iris diaphragm 5 whose aperture size is changed by a diaphragm driver 6 to thereby adjust the exposure amount for the image sensor 2.

A pre-amplifier 7 is connected to the image sensor 2 to amplify a video signal outputted from the image sensor 2. The video signal outputted from the pre-amplifier 7 is inputted to a video signal processing circuit 8 to be subject to signal processing such as gamma correction and signal conversion conforming with the NTSC system, and then sent to a recording apparatus 9. The recording apparatus 9 is a known magnetic recording apparatus which records the processed video signal on a recording medium such as a magnetic tape.

A detector 10 connected to the pre-amplifier 7 derives three color signals from the video signal and supplies them to an integrator 11. The integrator 11 integrates the three color signals to obtain an overall exposure amount of the image sensor 2, and outputs it to a diaphragm controller 12. The diaphragm controller 12 outputs a diaphragm aperture size signal such that the integrated overall exposure amount takes a predetermined constant value, i.e., a reference value determined in accordance with the dynamic range of the image sensor 2. This diaphragm aperture size signal is inputted to the diaphragm driver 6 to effect a feedback control of the diaphragm 5 so as to make the overall exposure amount for the image sensor 2 take a constant value.

The video signal from the pre-amplifier 7 is supplied to a low-pass filter 16 for photometry and a band-pass filter 17 for range finding. The low-pass filter 16 has a cutoff frequency about 1.8 MHz, picks up the brightness signal components from the video signal and supplies them to an A/D converter 18. The band-pass filter 17 has a pass-band from 60 KHz to 2.4 MHz which is the spatial frequency components of a usual subject, picks up the signal components within the pass-band from the video signal, and sends them to an auto-focus apparatus (AF apparatus). This AF apparatus checks the contrast of an image in accordance with the spatial frequency, and adjusts the focus of the taking lens 3 so as to have a maximum contrast.

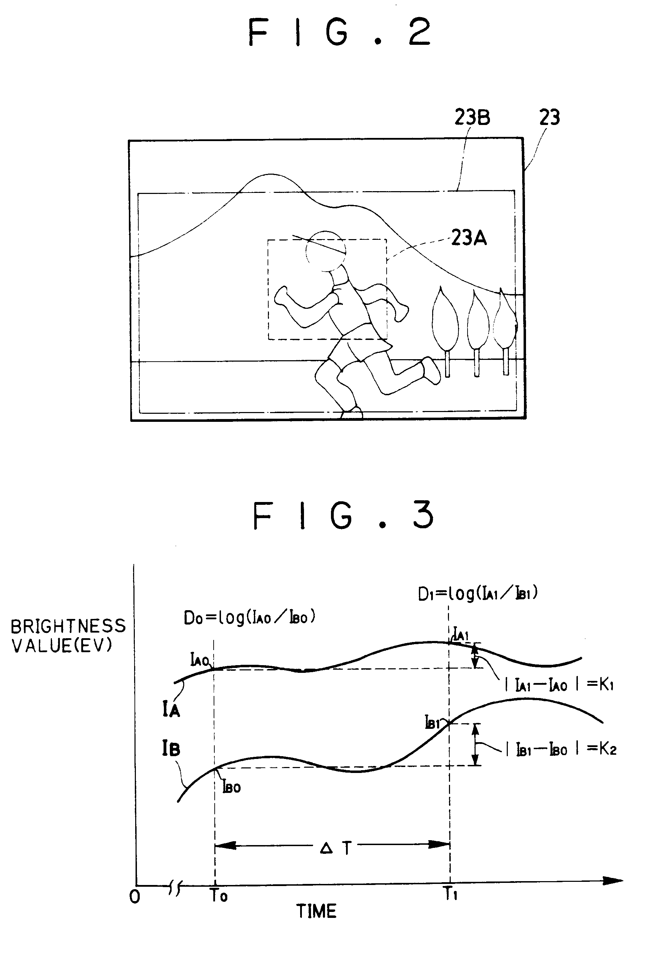

The A/D converter 18 converts the brightness signal derived by the low-pass filter 16 into a digital signal which is outputted to a central image area adder 20 and an overall image adder 21 to which supplied are gate signals $GA_1$ and $GA_2$ from a window signal generator 22. As indicated by a dot line in Fig.2, the gate signal $GA_1$ causes the central image area adder 20 to add brightness signals at pixels only within a central area 23A of a frame 23. As indicated by a one-dot-chain line in Fig.2, the gate signal $GA_2$ causes the overall image adder 21 to add brightness signals at pixels only within an area 23B excepting the upper area of the frame 23 where a bright sky is located. The window signal generator 22, as well as a sensor driver 26 for driving the image sensor 2, operates in synchronism with clock pulses from a synchronous signal generator 27.

The central image area adder 20 and overall image adder 21 add brightness signals for the central area 23A and overall area 23B, respectively, to obtain a central image area averaged brightness value $I_A$ and overall image averaged brightness value $I_B$ which are sent to a microprocessor unit (MPU) 30. The central image area averaged brightness value $I_A$ and overall image averaged brightness value $I_B$ are the average brightness values obtained by brightness values $\Sigma_A$ and $\Sigma_B$ respectively for the central area 23A and the overall frame 23B divided by the corresponding areas $S_A$ and $S_B$, which are given by:

$$I_1 = \Sigma_A / S_A, \quad I_2 = \Sigma_B / S_B$$

MPU 30 calculates a logarithm of a ratio of the central area averaged brightness value $I_A$ to the overall image averaged brightness value $I_B$, which is given by:

$$D = \log (I_A / I_B)$$

If the absolute value $|D|$ is in excess of a threshold value $Th_D$, the center weighted measuring (exposure control mode emphasizing the central area 23A) is selected to output a correction signal by which the reference value is corrected. This correction signal is supplied via a D/A converter 31 to the diaphragm controller 12. The gain of the diaphragm controller 12 is regulated by the correction signal and the exposure is controlled. If $|D| \leq Th_D$, the averaged brightness measuring is selected so as not to output the correction signal. In this manner, if the brightness distribution within the frame 23 corresponds to a rear light or spot illumination state, the exposure control is conducted to obtain a proper exposure at the central area 23A. If the brightness distribution corresponds to an ordinary state such as a front light state, the exposure control is conducted to obtain a proper exposure for the overall area of the frame 23.

In addition to the above-described exposure control by MPU 30, it also compares the central area averaged brightness value $I_A$ with the overall image averaged brightness value $I_B$ after a lapse of a predetermined time, and estimates how the contents of the scene change. Specifically, as shown in Fig.3, assuming that the central area averaged brightness value $I_A$ and overall image averaged brightness value $I_B$ take values $I_{A0}$ and $I_{B0}$ at time $T_0$, and value $I_{A1}$ and $I_{B1}$ at time $T_1$ after a small time interval $\Delta T$, then the differences are given by

$$K_1 = |I_{A1} - I_{A0}|$$

$$K_2 = |I_{B1} - I_{B0}|$$

These values are compared with the threshold values $Th_1$ and $Th_2$. The comparison results are used to judge the scene condition states as shown in TABLE 1.

TABLE 1

|  | $K_1 \leq Th_1\ K_2 > Th_2$ | $K_1 > Th_1\ K_2 \leq Th_2$ | $K_1 > Th_1\ K_2 > Th_2$ | $K_1 \leq Th_1\ K_2 \leq Th_2$ |
|---|---|---|---|---|
| $|D_0| > Th_D$ | (1) | (2 - A) <br><br> (2 - B) | (3) | (4) |
| $|D_0| \leq Th_D$ | (5) | (6) | (7) | (8) |

$|D_0| > Th_D$ corresponds to the exposure control by the center weighted measuring at time $T_0$, and $|D_0| \leq Th_D$ corresponds to the exposure control by the averaged brightness measuring. TABLE 1 is stored as a look-up table in ROM 36.

The states (1) to (8) have correspondences to actual recorded scenes at the beginning and end of $\Delta T$ as in the following:

    State (1): only background changes
    State (2): principal subject moves
    State (3): scene switches (or wholly changes)
    State (4): substantially no change
    State (5): only background changes
    State (6): principal subject moves to the central area
    State (7): scene switches; and
    State (8): substantially no change.

As a sub-classification for the state (2), state (2-A) stands for $|D_1| > |D_0|$, and state (2-B) for $|D_1| \leq |D_0|$. An example of state (2-A) is a scene where a principal subject moves to the central area, and an example of state (2-B) is a scene where a principal subject moves from the central area to a peripheral area.

MPU 30 performs the above processes and thereafter, the contents of scenes at the beginning and end of $\Delta T$ are estimated to accordingly change the exposure control speed. Specifically, for example, if the contents of scenes are judged as changing in the order of states (1), (2-B), (5), (6) and (8), then the speed of adjusting the diaphragm 5 is lowered, whereas the contents of scenes are judged as changing in the order of states (2-A), (3), (4) and (7), then the speed of adjusting the diaphragm 5 is made high. This is done by outputting a drive speed control signal to the diaphragm driver 6 via a D/A converter 33.

It is common that a video camera uses a zoom lens as the taking lens 3. A potentiometer 34 detects a zoom position signal from the position of a variator lens and outputs it to MPU 30 via an A/D converter 35. In accordance with the zoom position signal, MPU 30 calculates the focal length data of the taking lens 3 and the zoom speed data. ROM 36 stores therein sequence programs and other necessary data for the above-described operations and the like to be executed by MPU 30.

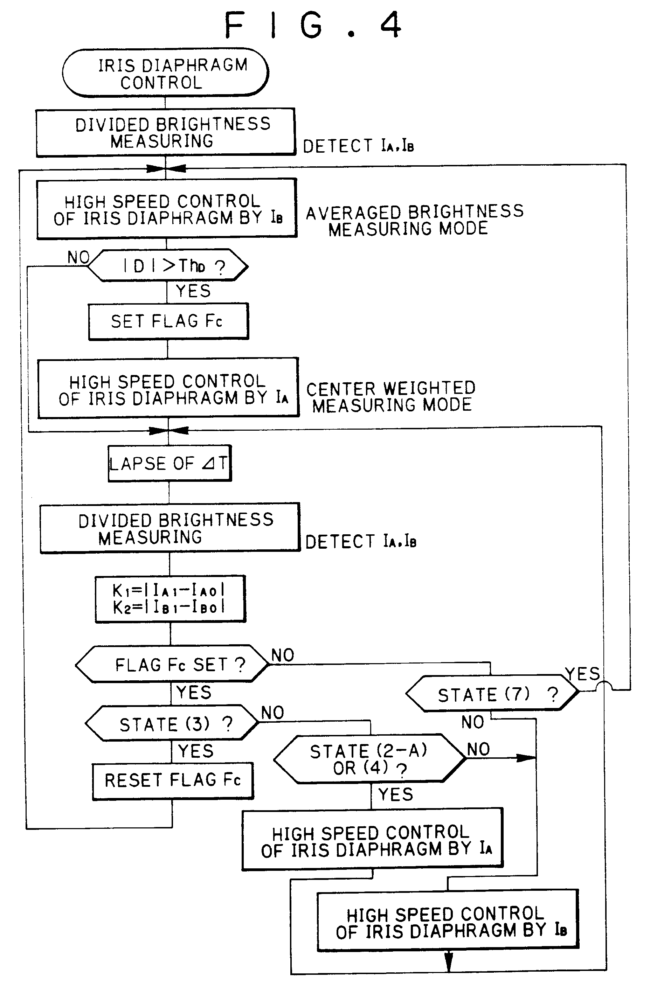

The operation of the automatic exposure control apparatus constructed as above will be described with reference to the flow chart shown in Fig.4. The diaphragm control starts when scenes starts to be picked up. At the same time, divided brightness measuring is carried out to obtain the averaged brightness values $I_A$ and $I_B$ of the central area 23A and overall area 23B of the frame 23. In accordance with the overall image averaged brightness value $I_B$, the diaphragm control is first carried out through averaged brightness measuring. In this case, MPU 30 outputs no correction signal to the diaphragm controller 12 so that the diaphragm driver 6 adjusts the diaphragm 5 so as to make constant the whole incident light amount of the image sensor 2. Also in this case, MPU 30 outputs as the drive speed control signal a high speed signal so that the diaphragm 5 is adjusted quickly in the averaged measuring mode. In the above manner, at the start of picking up scenes, the exposure control is carried out quickly in the averaged measuring mode so that the exposure amount of a principal subject can be prevented from departing greatly from the proper one.

Next, the value D is calculated and compared with the value $Th_D$. If $|D| > Th_D$, it means that the difference between the central area averaged brightness value $I_A$ and overall image averaged brightness value $I_B$ is large, and there is a high possibility that the principal subject is located at the central area 23A. In such a case, if the diaphragm control is carried out in the averaged measuring mode, it often results in an improper exposure amount of the principal subject. Accordingly if it is judged as $|D| > Th_D$, a flag Fc is set which indicates that the control has selected the center weighted measuring mode, and the exposure correction data corresponding to the central area averaged brightness value $I_B$ is outputted from MPU 30. The diaphragm 5 is therefore driven at high speed in the center weighted measuring mode. If $|D| \leqq Th_D$, the averaged measuring mode keeps being carried out.

After such a diaphragm control and a lapse of $\Delta T$, the divided brightness measuring is again executed to detect the new central area averaged brightness value $I_{A1}$ and new overall image averaged brightness value $I_{B1}$ as shown in Fig.3 for the comparison with the previous central area averaged brightness value $I_{A0}$ and overall image averaged brightness value $I_{B0}$. The values $K_1$ and $K_2$ are obtained which are the absolute values of the differences between these brightness values. The values $K_1$ and $K_2$ are compared with the threshold values $Th_1$ and $Th_2$ to discriminate scenes in accordance with TABLE 1. The time $\Delta T$ may be made equal to a frame read period of the image sensor 2. In this case, it is not necessary to provide an additional timer for counting the time $\Delta T$.

With the obtained values $K_1$ and $K_2$, the contents of scenes at the beginning and end of $\Delta T$ are estimated. In the center weighted measuring mode, if it is estimated as state (3), i.e., if both the central area and overall image averaged brightness values $I_A$ and $I_B$ change greatly, it means that for example the scene has switched (or wholly changed) upon panning the video camera to a high extent. Accordingly, after releasing the center weighted measuring mode, the diaphragm control starts again for a new scene in the averaged brightness measuring mode.

If only the central area averaged brightness value $I_A$ changes greatly with less change of the overall image averaged brightness value $I_B$ and $|D_1| > |D_0|$, it means for example a scene where a principal subject at the central area 23A moves in the rear light. In this case, with the center weighted measuring mode being unchanged, the diaphragm 5 is adjusted at high speed in accordance with the newly detected central area averaged brightness value $I_{A1}$ to make the aperture size to follow quickly. If both the central area overall image averaged brightness values $I_A$ and $I_B$ change very slightly, it means that scenes having similar brightness distribution are picked up continuously. Accordingly, with the center weighted measuring mode being unchanged, the diaphragm control speed is made to follow at high speed.

If it is estimated as state (2-B) and (3) under the center weighted measuring mode or a state other than state (7) under the averaged measuring mode, it means that for example a principal subject moves inside the frame 23 shown in Fig.2 or the video camera is panned to follow the motion of a principal subject and only the background brightness changes. In such a case, MPU 30 outputs a drive speed control signal by which the drive speed determined by the diaphragm driver 6 is made lower. Accordingly, even if the diaphragm aperture size signal is supplied to the diaphragm driver 6 by the diaphragm controller 12, the diaphragm driver 6 adjusts the diaphragm 5 slowly, thereby preventing a rapid change of the exposure amount of the principal subject. During repetitive executions of the divided brightness measuring, if the central area and overall image averaged brightness values $I_A$ and $I_B$ change, then a new diaphragm aperture size signal is inputted to the diaphragm driver 6 before the complete adjustment by the previous diaphragm control signal. Accordingly, the diaphragm 5 is adjusted slowly in accordance with the continuously supplied signal of a new diaphragm aperture size.

In the above manner, in the case where a continuity between scenes is recognized, rather than controlling the diaphragm 5 at high speed in accordance with the background brightness change, making slow a change of the diaphragm aperture size allows a stable exposure amount of the principal subject. Although the background is sacrificed for such control more or less, reproduced scenes have more natural images by giving the principal subject a stable exposure during consecutive scenes.

The above description is an example of judging the continuity between scenes in accordance with the photometric values of brightness signals obtained from the low-pass filter 16. The continuity between scenes can be judged from the spatial frequency components of the brightness signal. For instance, the output signal from the band-pass filter 17 as indicated by a dotted line in Fig.1 is sent via the A/D converter 18 to the central area image adder 20. The continuity between scenes can be judged only by the output signal from the central area adder 20. The range finding area of an AF apparatus of a video camera is generally the central area 24 shown in Fig.2, and the taking lens 3 is focussed relative to this area. The band-pass filter 17 has a characteristic that it passes the signal components of a spatial frequency band which becomes high upon in-focus condition. Therefore, the output signal from the central image area adder 20 is an integration value of the spatial frequency components within the in-focus area.

The integration values of the spatial frequency components at the beginning and end of $\Delta T$ are compared with each other. If there is a large change, it can be estimated that the range finding object, i.e., a principal subject has moved or changed. In such a case, the drive speed of the diaphragm 5 is made high. If the integration values of the spatial frequency components change only slightly, the drive speed of the diaphragm 5 is lowered.

Letting $\theta$ be the angle of view of the taking lens, $\underline{l}$ be the length of a principal subject within the frame 23 in the direction, for example, parallel to the longer side of the frame 23, and X be the distance to the actual principal subject, then the following equation stands:

$$\dot{l} \propto 1/(\tan\theta \cdot X)$$

It is therefore possible to estimate a presence of a scene switching if the value $\underline{l}$ at the beginning and end of $\Delta T$ changes in excess of a predetermined range.

There is a case where the brightness distribution in the frame 23 as shown in Fig.2 changes greatly because of zooming even if the video camera itself takes a fixed still posture. In such a case, it is usually preferable to consider that a scene has been switched, so that the drive speed of the diaphragm 5 is made high. Such a judgement of scene switching may be made in accordance with the change amount with time of the zoom position signal supplied from the potentiometer 34 shown in Fig.1.

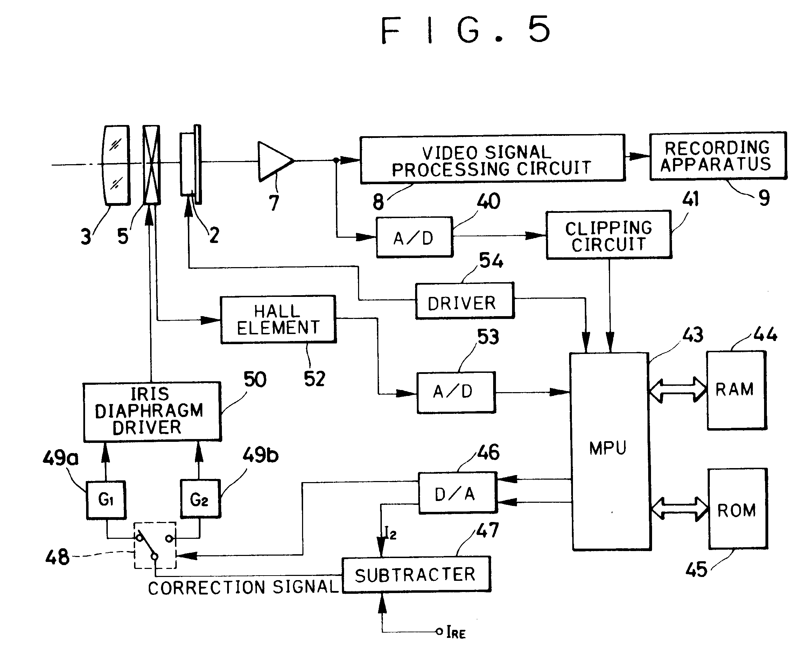

Fig.5 shows an embodiment wherein the diaphragm control speed is adjusted in accordance with a change in difference between the brightness values of the central area and overall image. Elements similar to those shown in Fig.1 are represented by identical reference numerals. A video signal supplied from the image sensor 2 and from pre-amplifier 7 is supplied to an A/D converter 40 which performs digital conversion at a sampling frequency of 3.5 MHz. The brightness signal in the video signal is converted into a digital signal. This digital brightness signal undergoes knee compression by a clipping circuit 41, with the high brightness signal being clipped at a maximum level and the low brightness signal at a minimum level. Similar processing is carried out at an image recording system, e.g., at the image signal processing circuit 8.

MPU 43 causes the clipped brightness signal data to be stored in RAM 44, and divides the brightness signal data within the frame 23 into those for the central area 23A and for the overall area 23B to thereby obtain the central area and overall image averaged brightness values $I_A$ and $I_B$ in the similar manner as the embodiment described previously. MPU 43 supplies a control signal corresponding to the obtained overall image averaged brightness value $I_B$ to a diaphragm driver 50 via a D/A converter 46, subtracter 47, switch 48, and one of gain setting units 49a and 49b.

The subtracter 47 is inputted with a reference photometry data $I_{RE}$ whose value allows obtaining a standard exposure amount taking into account the dynamic range of the image sensor 2. The subtracter 47 outputs a correction signal which makes "0" the difference between the reference photometry data $I_{RE}$ and the overall image averaged brightness value $I_B$. The switch 48 selects one of the gain setting units 49a and 49b in accordance with a switching signal supplied from MPU 43 via the D/A converter 46.

The gains of the gain setting units 49a and 49b are set at $G_1$ and $G_2$ ($G_1 > G_2$), respectively, so that the correction signal supplied via the switch 48 is amplified by the selected gain and applied to the diaphragm driver 50. If the switch 48 selects the gain setting unit 49a, the diaphragm driver 50 responds to the correction signal at high speed to adjust the diaphragm 5. On the other hand, if the switch 48 selects the other gain setting unit 49b, the diaphragm 5 responds to the correction signal slowly. A Hall element 52 detects the position data of the diaphragm 5 and supplies it to MPU 43 via an A/D converter 53. The diaphragm 5 is therefore controlled by a feedback in accordance with the reference photometry data $I_{RE}$. Reference numeral 54 represents a driver which is constructed of the sensor driver 26 and synchronous signal generator 27 shown in Fig.1.

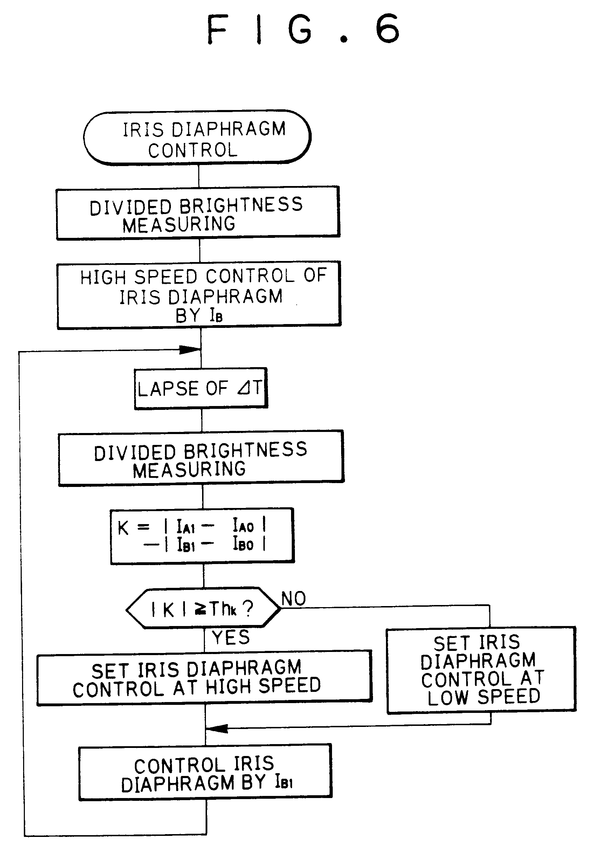

The operation of the embodiment shown in Fig.5 will then be described with reference to the flow chart shown in Fig.6. This exposure control system always operates in the averaged measuring mode using the overall image averaged brightness value $I_B$. However, in the similar manner to the embodiment shown in Fig.1, in addition to the overall frame averaged brightness value $I_B$, the central area averaged brightness value $I_A$ is detected and monitored with respect to time. Specifically, as shown in Fig.3, the brightness difference K is calculated using the central area averaged brightness values $I_{A0}$ and $I_{A1}$ and overall image averaged brightness values $I_{B0}$ and $I_{B1}$, respectively at the beginning and end of time $\Delta T$:

$$K = |I_{A1} - I_{A0}| - |I_{B1} - I_{B0}|$$

The absolute value of K is compared with a threshold value $Th_K$. If $|K| \geqq Th_K$, the switch 48 selects the gain setting unit 49a, and if $|K| < Th_K$, the gain setting unit 49a is selected. Therefore, if there is a large difference between changes in the central area and overall image averaged brightness values $I_A$ and $I_B$ at the beginning and end of time $\Delta T$, the diaphragm 5 is controlled at high speed. If there is only a small difference, the diaphragm 5 is controlled slowly.

The brightness distribution of a scene changes in many cases if a scene is switched, even if the overall image averaged brightness value does not change greatly. Accordingly, the continuity between scenes can be judged on the basis of the value K. If there is a continuity between scenes, the diaphragm 5 is driven slowly to provide a smooth change of the exposure control of a principal subject even if the diaphragm 5 is required to be adjusted because of a change of the overall image averaged brightness value $I_B$. The brightness of a face of a principal subject person will be prevented from being made intermittently bright and dark in continuously picking up scenes.

It is advantageous from the stand point of good image recording that the exposure control is made to follow quickly by raising the response speed of the diaphragm when a scene changes, and that, if the contents of scenes are continuous in nature, the exposure amount of a principal subject is made stable by lowering the response speed of the diaphragm even if the brightness distribution of scenes changes more or less. Such an exposure control may be carried out by using the structure shown in Fig.1 and modifying the programs in ROM 36 to realize the following algorithm.

Specifically, in the embodiment shown in Fig. 1, the drive speed of the diaphragm 5 is changed by judging whether or not the absolute values $K_1$ and $K_2$ of the change amounts of the central area and overall image averaged brightness values $I_A$ and $I_B$ are in excess of the predetermined threshold value, and by referring to the states described in TABLE 1. However, in this alternative, the drive speed of the diaphragm 5 is changed in accordance with in which direction (+ or - direction) and how much the values of the average brightness values $I_{A1}$ and $I_{B1}$ shown in Fig.3 changed relative to the previous averaged brightness values $I_{A0}$ and $I_{B0}$.

According to this method, the drive speed of the diaphragm 5 is selected in such a manner that the previous averaged brightness values $I_{A0}$ and $I_{B0}$ are subtracted from the central area and overall image averaged brightness values $I_{A1}$ and $I_{B1}$ newly detected at each lapse of time $\Delta T$, and that the subtraction results $\Delta S_1$ and $\Delta S_2$ are used for the reference to a rule map of TABLE 2 or TABLE 3. TABLE 2 is used when the previous mode is the center weighted measuring mode, and TABLE 3 is used when the previous mode is the averaged measuring mode.

TABLE 2

|    | NB | NM | NS | Z0 | PS | PM | PB |
|----|----|----|----|----|----|----|----|
| PB |    |    |    | F  | F  | VF | VF |
| PM |    |    |    | M  | F  | VF | VF |
| PS |    |    |    | S  | M  | F  | F  |
| Z0 | F  | M  | S  | VS | S  | M  | F  |
| NS | F  | F  | M  | S  |    |    |    |
| NM | VF | VF | F  | M  |    |    |    |
| NB | VF | VF | F  | F  |    |    |    |

TABLE 3

|    | NB | NB | NS | Z0 | PS | PM | PB |
|----|----|----|----|----|----|----|----|
| PB |    |    |    | M  | F  | VF | VF |
| PM |    |    |    | S  | F  | VF | VF |
| PS |    |    |    | S  | M  | M  | M  |
| Z0 | M  | M  | S  | VS | S  | M  | M  |
| NS | M  | M  | M  | S  |    |    |    |
| NM | VF | VF | F  | S  |    |    |    |

TABLE 3 (continued)

|  | NB | NB | NS | Z0 | PS | PM | PB |
|---|---|---|---|---|---|---|---|
| NB | VF | VF | F | M |  |  |  |

Symbols used in TABLE 2 and TABLE 3 have the following meanings:

PB large change amount in "+" direction
PM middle change amount in "+" direction
PS small change amount in "+" direction
Z0 "0" change amount
NS small change amount in "-" direction
NM middle change amount in "-" direction
NB large change amount in "-" direction
VF ultra-high drive speed for diaphragm
F high drive speed for diaphragm
M middle drive speed for diaphragm
S low drive speed for diaphragm
VS ultra-low drive speed for diaphragm

The rule maps are used in determining the drive speed of the diaphragm 5 in accordance with the values $\Delta S_1$ and $\Delta S_2$ while considering the previously set measuring mode. The diaphragm 5 is adjusted in accordance with the drive speed determined by the rule maps and by using as a target value the diaphragm aperture size corresponding to the newly detected value $I_{A1}$ or $I_{B1}$. Accordingly, if the measuring period ($\Delta T$) is about 1/30 second and the diaphragm drive speed is set to a low speed, the target value of the diaphragm control is sequentially renewed so that the diaphragm 5 will not necessarily and completely follow the measured value. However, in such a case, there is a continuity between scenes so that the exposure amount of a principal subject becomes stable and thereby resulting in natural images.

TABLE 2 and TABLE 3 show correspondence between input data $\Delta S_1$ and $\Delta S_2$ and output data or diaphragm drive speeds. For such correspondence, Fuzzy inference may be used. Specifically, there are provided membership functions for the determination to what extent the input data $\Delta S_1$ and $\Delta S_2$ are attributed to a set of PB to NB, and membership functions for the determination to what extent the diaphragm drive speeds are attributed to a set of VS to VF. By using these membership functions, a Fuzzy set is determined and a group of Fuzzy sets is formed to obtain a diaphragm drive speed.

The output data (diaphragm drive speed data) for the input data $\Delta S_1$ and $\Delta S_2$ can be set off-line beforehand. The obtained output data are written as the output data in the rule maps of TABLE 2 and TABLE 3. Therefore, the output data can be searched from the input data at once, leading to speed-up and low cost of the control system.

The embodiments of this invention have been given above. The invention is not limited to the above-described embodiments. For example, although the drive speed of the diaphragm itself is changed so as to slow down the exposure control, the diaphragm drive speed may be made constant and the value of the exposure correction amount is gradually changed toward the target value. Further, in judging a change in the contents of scenes from the measured values, not only by comparing the central area with overall image, but also three or more measuring areas may be used and monitored relative to time in the multi-pattern measuring.

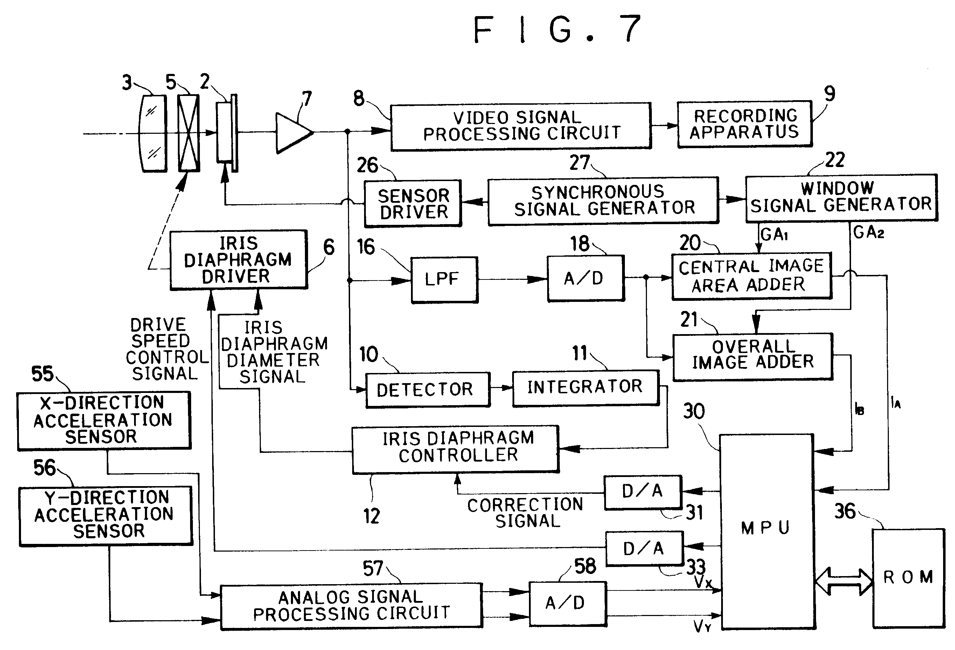

Fig.7 shows an embodiment wherein the motion speed of a video camera is detected with an acceleration sensor, and the response speed of the exposure control is regulated in accordance with the detected motion speed. Elements similar to those shown in Fig.1 are represented by identical reference numerals. In this embodiment, even if a video camera is moved abruptly during panning a principal subject, the exposure amount of the principal subject will not change unnaturally. Near the pick-up system including the taking lens 3 and image sensor 2, there are mounted an X-direction acceleration sensor 55 and Y-direction acceleration sensor 56 for measuring acceleration applied to the video camera in the right/left direction and up/down direction, respectively. As the acceleration sensors 55 and 56, an angular velocity sensor manufactured by Matsushita Electric Industrial Co., Ltd. may be used which is constructed by a gyro signal detecting unit with two piezoelectric bimorphs disposed in T-character shape, a tuning fork drive circuit, and others. The acceleration sensors 55 and 56 detect a motion of a video camera during panning or caused by camera shake, and converts the change amount of the motion speed of the video camera into an electric signal which is supplied to an analog signal processing circuit 57. The analog signal processing circuit 57 amplifies and processes the input analog signal and thereafter, supplies it to an A/D converter 58 which in turn digitally converts it into the acceleration data and outputs it to MPU 30.

MPU 30 compares a threshold value $Th_V$ with the absolute values $|V_X|$ and $|V_Y|$ of the acceleration data $V_X$

and $V_Y$ in the right/left direction and up/down direction. The threshold value $Th_V$ is set such that there is neglected an acceleration caused by a slight camera shake in picking up scenes by holding the video camera with hands, and that the exposure control speed is changed for the case where there is a large acceleration caused by a rather big camera shake or by abruptly moving the video camera in order to follow a quick motion of a subject. If $V_X \gtrsim Th_V$ or $V_Y \gtrsim Th_V$, MPU 30 makes slow the adjustment speed of the diaphragm 5. If $|V_X| < Th_V$ and $|V_Y| < Th_V$, MPU 30 makes high the adjustment speed of the diaphragm 5. The speed control is performed by outputting a drive speed control signal to the diaphragm driver 6 via the D/A converter 33

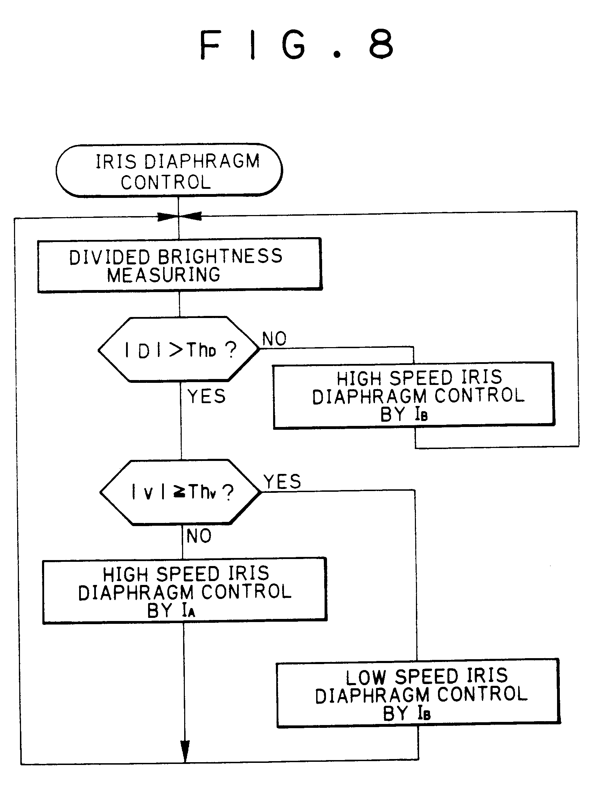

Fig.8 is a flow chart explaining the operation of the embodiment shown in Fig.7. As picking up scenes starts, the diaphragm control starts. Simultaneously, the divided brightness measuring is executed to obtain the averaged brightness values $I_A$ and $I_B$ of the central area 23A and overall area 23B of the frame 23. A logarithm D of a ratio of the averaged brightness value $I_A$ to $I_B$ is calculated. The absolute value $|D|$ is compared with the value $Th_D$. If $|D| \leqq Th_D$, it means that there is only a slight difference between the central area and overall image averaged brightness values $I_A$ and $I_B$. Accordingly, the diaphragm 5 is controlled at high speed in accordance with the overall image averaged brightness value $I_B$.

If $|D| > Th_D$, it means that there is a large difference between the central area and overall image averaged brightness values $I_A$ and $I_B$. In such a case, there is an ample possibility that a principal subject is located at the central area 23A. Therefore, if the diaphragm control is executed in the averaged measuring mode, it often results in an insufficient exposure amount of the principal subject. Accordingly if it is judged as $|D| > Th_D$, the exposure correction data corresponding to the central area averaged brightness value $I_A$ is outputted from MPU 30.

If it is judged as $|D| > Th_D$, the acceleration data $V_X$ and $V_Y$ in the respective directions are supplied from the X- and Y-direction acceleration sensors 55 and 56, and the absolute values $|V_X|$ and $|V_Y|$ are compared with the threshold value $Th_V$. If one of $|V_X|$ and $|V_Y|$ is larger than or equal to $Th_V$, MPU 30 causes the diaphragm 5 to be adjusted slowly in accordance with the exposure amount determined by the central area averaged brightness value $I_A$. If both $|V_X|$ and $|V_Y|$ are smaller than $Th_V$, MPU 30 causes the diaphragm 5 to be adjusted quickly in accordance with the exposure amount determined by the central area averaged brightness value $I_A$.

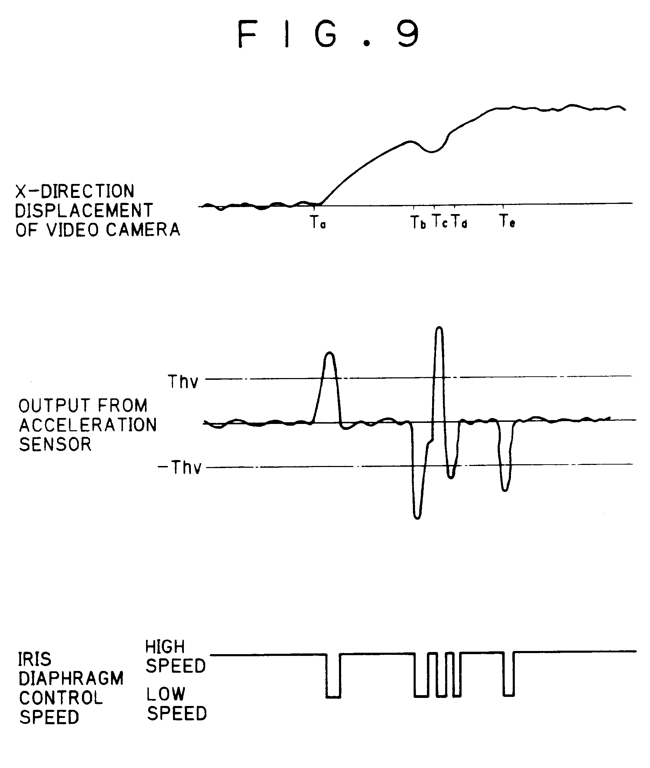

Fig.9 shows the relationship between the video camera motion and the diaphragm control speed. For the simplicity of description, only the motion in the X-direction of a video camera is shown in Fig.9. Before time $T_a$, the video camera does not move at all except slight movement by a camera shake. At time $T_a$, a principal subject observed within the central area of a frame starts moving and the video camera moves abruptly to follow the motion of the principal subject. Accordingly, the output from the X-direction acceleration sensor 55 rises abruptly to exceed the threshold value $Th_V$ thereby making slow the diaphragm drive speed.

After time $T_a$, the video camera is being panned at a constant speed to follow the principal subject. In this case, the acceleration is small so that the diaphragm drive speed is made high. At time $T_b$, the motion of the principal subject changes and the video camera is abruptly swung in the direction opposite to the previous direction. Therefore, the output of the X-direction acceleration sensor 55 takes a large negative value so that the diaphragm drive speed is made slow. Immediately thereafter at time $T_c$, the video camera is swung back in the initial direction so that a large acceleration is applied and the diaphragm drive speed is controlled to a low speed.

Instantaneously, the diaphragm drive speed is temporarily controlled to a high speed. However, since an acceleration in the negative direction is applied at time $T_d$ when the video camera is stopped to move, the diaphragm drive speed is controlled to a low speed. After time $T_d$, as the video camera is panned slowly, the diaphragm drive speed gradually becomes high. At time $T_e$ when the principal subject stops and the video camera is stopped, an acceleration in the negative direction is applied to the video camera and the diaphragm drive speed is switched to a low speed. After $T_e$ while the video camera is fixed and still with only a motion in the order of slight camera shake, the diaphragm drive speed is again controlled to a high speed.

In order to prevent an extraordinary deviated exposure amount of a principal subject from a proper one at the start of picking up scenes, it is preferable to first control the diaphragm by the averaged brightness measuring based on using the overall image averaged brightness value $I_B$. In this case, MPU 30 does not output the correction signal to the diaphragm controller 12 so that the diaphragm 5 is controlled to make constant the whole incident light amount to the image sensor 2. In addition, MPU 30 outputs a high speed signal as the drive speed control signal.

There may be provided a scene stabilizing mechanism by which the pick-up system having the taking lens and CCD is rotated or moved in the direction cancelling out the acceleration applied to the video camera. As such a scene stabilizing mechanism there is known an apparatus by which the pick-up system is held in space by two shafts in the right/left and up/down directions, and the shafts are rotated by two actuators to move the pick-up system in the right/left and up/down directions.

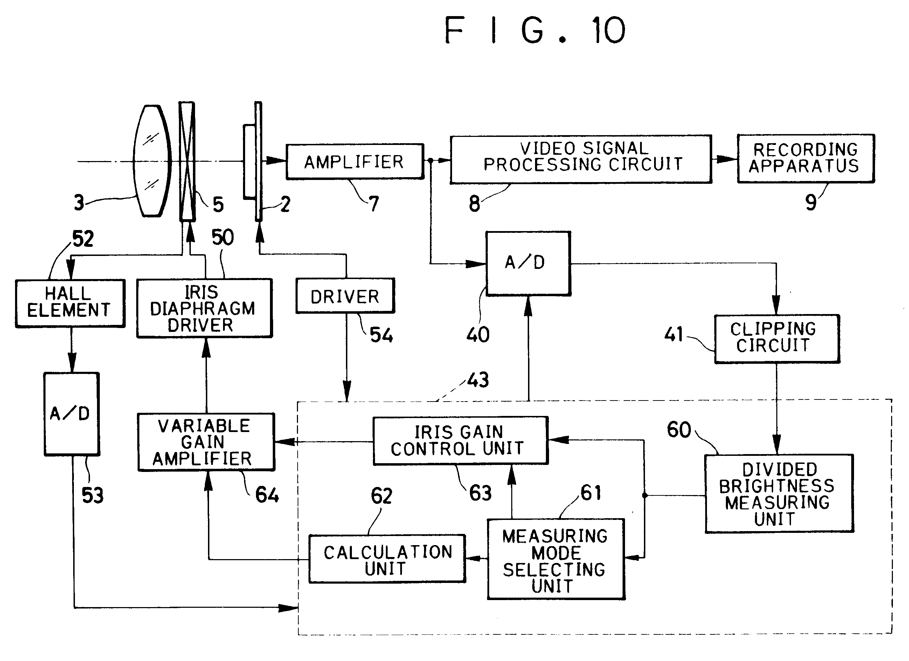

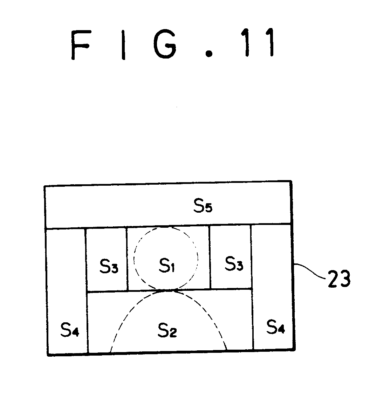

Fig.10 shows an embodiment wherein the exposure amount is determined by the divided brightness measuring, and the exposure control speed is changed in accordance with the value of the scene brightness value and in accordance with whether or not there is a continuity between scenes. Elements similar to those shown in Fig.5 are represented by identical reference numerals. In this embodiment, if there is a continuity between scenes, a stable exposure control is executed by smoothing the abrupt change in exposure even if the brightness distribution of scenes changes, without lowering the tracking ability of the diaphragm when the brightness of a scene changes greatly. MPU 43 shown as functional blocks is constructed of a divided brightness measuring unit 60, measuring mode selecting unit 61, calculating unit 62, and diaphragm gain control unit 63. The divided brightness measuring unit 60 enters one frame video signals in a frame memory (not shown), and divides the scene 23 into five areas $S_1$ to $S_5$ as shown in Fig.11 to obtain average brightness values $B_1$ to $B_4$ (in EV units) of video signals $S_1$ to $S_4$ added together. There are also calculated average brightness values $B_{ijk}$ (i, j, k = 1 to 4) for a combination of areas, and average brightness value $S_{1234}$ for the areas $S_1$ to $S_4$. The area $S_5$ where a principal subject is rarely located is excluded from the calculation.

The measuring mode selecting unit 61 discriminates a scene through comparison between the average brightness values $B_1$ to $B_4$ and $B_{ijk}$ to thereby select an equation (1) to (7) for a discriminated scene. In accordance with the equation selected by the measuring mode selecting unit 61, the calculation unit 62 calculates a multi-pattern measured brightness value C by which a proper exposure can be obtained. Examples of equations (1) to (7) are as follows:

$$C_1 = B_{123} \qquad\qquad \text{Equation (1)}$$

$$C_2 = (B_1 \times W_1 + B_2 \times W_2 + B_3)/(W_1 + W_2 + 1) \qquad\qquad \text{Equation (2)}$$

$$C_3 = (B_{12} \times W_3 + B_3 + B_4)/(W_3 + 2) \qquad\qquad \text{Equation (3)}$$

$$C_4 = (B_{13} \times W_4 + B_2 \times W_5 + B_4)/(W_4 + W_5 + 1) \qquad\qquad \text{Equation (4)}$$

$$C_5 = (B_{134} \times W_6 + B_2)/(W_6 + 1) \qquad\qquad \text{Equation (5)}$$

$$C_6 = (B_{123} \times W_7 + B_2)/(W_7 + 1) \qquad\qquad \text{Equation (6)}$$

$$C_7 = B_{1234} \qquad\qquad \text{Equation (7)}$$

Symbols $W_1$ to $W_7$ are the weighting coefficients which take values (EV) for example as in the following:

$$W_1 = 10, W_2 = 1, W_3 = 10, W_4 = 10, W_5 = 1, W_6 = 10, W_7 = 10$$

The scene brightness value calculated by the calculation unit 62 is sent to the variable gain amplifier 64 for controlling the response speed of the diaphragm 5. The diaphragm gain control unit 63 compares the average brightness value $B_{1234}$ obtained by the divided brightness measuring unit 60 with the previous average brightness value of $B_{1234}$, and also judges if the equation selected by the measuring mode selecting unit 61 is the same as the previously selected one. In accordance with the comparison results and judgement results, a gain control signal is outputted to change the gain level of the variable gain amplifier 64.

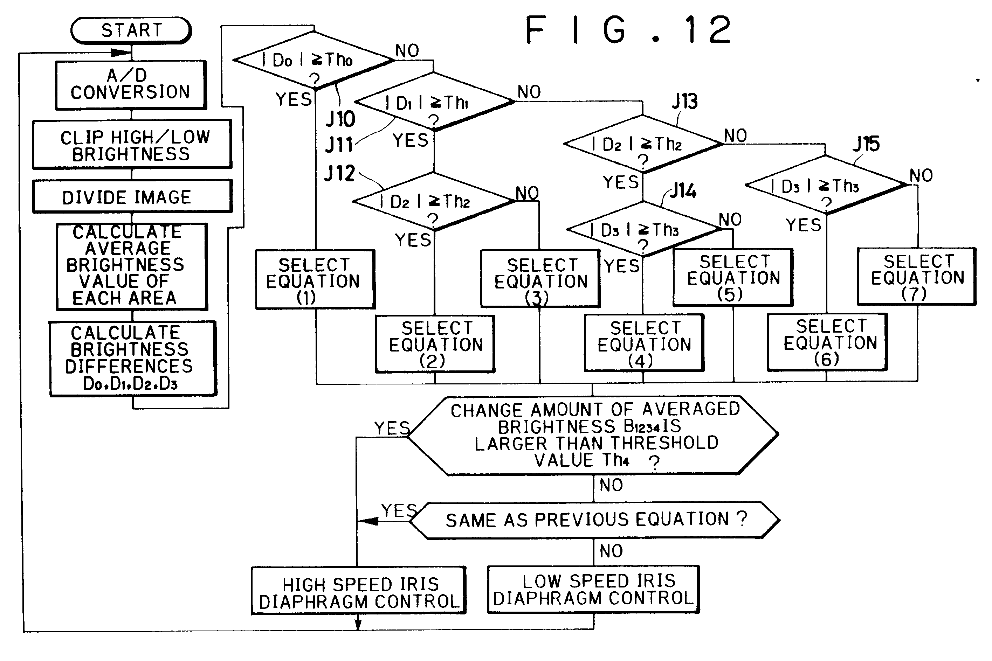

The operation of the embodiment shown in Fig.10 will be described with reference to the flow chart of Fig.12. The exposure control sequence shown in Fig.12 is executed for example at an interval of 1 second. After the video signal is digitally converted and clipped, it is sent to the divided brightness measuring unit 60 and written in the frame memory. The divided brightness measuring unit 60 divides the frame 23 into five areas $S_1$ to $S_5$ and calculates the average brightness values $B_1$ to $B_4$, $B_{ijk}$ (i, j, k = 1 to 4), and $B_{1234}$. These average brightness values are written in a memory in MPU 43 and read by the measuring mode selecting unit 43 if necessary. The average brightness value $B_{1234}$ is inputted to the diaphragm gain control unit 63 and compared with the previous average brightness value of $B_{1234}$.

The measuring mode selecting unit 61 first calculates the brightness differences between respective areas. It is assumed that the target value of the brightness level of the frame is set such that the video output becomes 60 IRE (gamma = 0.45 series), and is represented by $B_{ref}$. The brightness difference $D_0$ between the target value $B_{ref}$ and the average brightness value $B_{123}$ of the areas $S_1$ to $S_3$ is obtained by the following equation, where the base of log is a natural logarithm "e":

$$D_0 = \log(B_{123}/B_{ref})/\log 2$$

The brightness difference $D_1$ between the areas $S_1$ and $S_3$ is obtained by:

$$D_1 = \log(B_1/B_3)/\log 2$$

The brightness difference $D_2$ between the areas $S_1$ and $S_2$ is given by:

$$D_2 = \log (B_1/B_2)/\log 2$$

The brightness difference $D_3$ between the average brightness value $B_{13}$ of the areas $S_1$ and $S_3$ and the average brightness value $B_4$ of the area $S_4$ is given by:

$$D_3 = \log (B_{13}/B_4)/\log 2$$

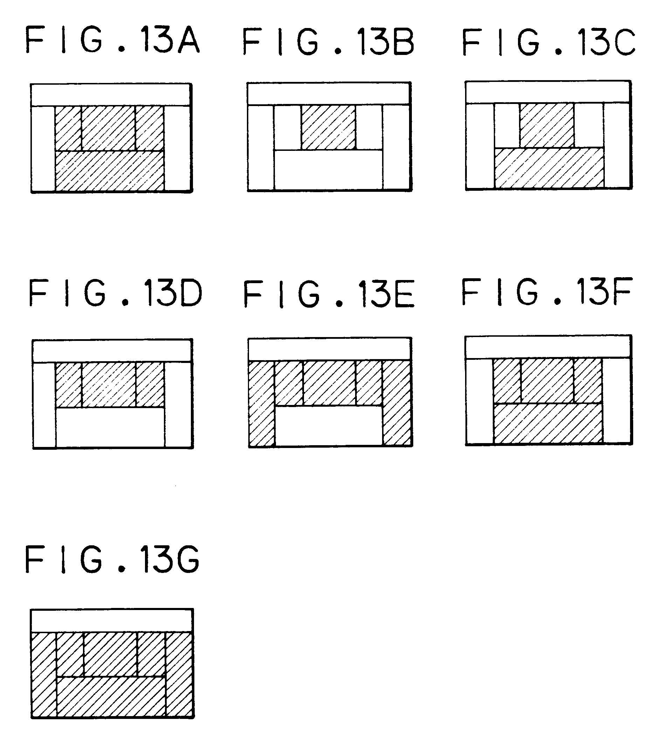

The measuring mode selecting unit 61 compares the threshold values $Th_0$ to $Th_3$ with the absolute values $|D_0|$ to $|D_3|$ of the brightness differences $D_0$ to $D_3$ to discriminate a scene so that one of the equations (1) to (7) is selected for a discriminated scene and calculates the multi-pattern measured brightness value C. Specifically, at a judgement step J10, $|D_0|$ is compared with the threshold value $Th_0$ (e.g., 3 EV). If the condition $|D_0| \geqq Th_0$ is not satisfied, it means that the present multi-pattern measured brightness value C is considerably different from its target value $B_{ref}$. For instance, such a case occurs immediately after power-on of a video camera, or when panning quickly from a dark room to a bright outdoor field. In such a case, it takes a long time for the feedback control of the diaphragm 5 to become stable, if a scene discrimination is made and thereafter the calculation is performed. In order to shorten this time, it is assumed that a principal subject is located at the hatched area in Fig.13A, and the equation (1) is selected to calculate the multi-pattern measured brightness value $C_1$.

At judgement step J11, if condition $|D_0| \geqq Th_0$ is not satisfied at judgement step J10, $|D_1|$ is compared with the threshold value $Th_1$ (e.g., 0.5 EV). If the condition $|D_1| \geqq Th_1$ is satisfied, it is assumed that the principal subject, e.g., its face, is located at the area $S_1$. In this case, at judgement step J12, $|D_2|$ is compared with the threshold value $Th_2$ (e.g., 0.75 EV). If the condition $|D_2| \geqq Th_2$ is satisfied, it means that the brightness is different between the face and clothings. Accordingly, as shown in Fig.13B, there is selected the equation (2) which emphasizes the area $S_1$ where the face is located, and the multi-pattern measured brightness value $C_2$ is calculated. If the condition $|D_2| \geqq Th_2$ is not satisfied, it means that there is scarcely a brightness difference between the face and clothings. Accordingly, as shown in Fig.13C, there is selected the equation (3) emphasizing the average brightness value $B_{12}$ of the areas $S_1$ and $S_2$, and the multi-pattern measured brightness value $C_3$ is calculated.

If not $|D_1| \geqq Th_1$, it means that there is no brightness difference between the areas $S_1$ and $S_3$. In this case, at judgement step J13 $|D_2|$ is compared with the threshold value $Th_2$. If the condition $|D_2| \geqq Th_2$ is satisfied, it means that there is no brightness difference between the areas $S_1$ and $S_3$ and there is a brightness difference between the areas $S_1$ and $S_2$. Accordingly, at step J14 it is judged if $|D_3| \geqq Th_3$ (e.g., 0.5 EV) is satisfied. If satisfied, it means that there is a difference between the average brightness value $B_{13}$ of the areas $S_1$ and $S_3$ and the average brightness value $B_4$ of the area $S_4$. Accordingly, as shown in Fig.13D, there is selected the equation (4) emphasizing the average brightness value $B_{13}$, and the multi-pattern measured brightness value $C_4$ is calculated.

If the condition $|D_3| \geqq Th_3$ is not satisfied, it means as shown in Fig.13E that there is no difference between the average brightness value $B_{13}$ of the areas $S_1$ and $S_3$ and the average brightness value $B_4$ of the area $S_4$. Therefore, there is selected the equation (5) emphasizing the average brightness value $B_{134}$ of the areas $S_1$, $S_3$ and $S_4$, and the multi-pattern measured brightness value $C_5$ is calculated.

If the condition $|D_2| \geqq Th_2$ is not satisfied at judgment step J13, it means that there is no brightness difference between areas $S_1$, $S_2$, and $S_3$ and that the average brightness value $B_{123}$ is near the target value $B_{ref}$. Therefore, it is judged if $|D_3| \geqq Th_3$ is satisfied. If satisfied, as shown in Fig.13F, there is selected the equation (6) emphasizing the average brightness value $B_{123}$, and the multi-pattern measured brightness value $C_6$ is calculated. If the condition $|D_3| \geqq Th_3$ is not satisfied, it means that there is no brightness difference between the areas $S_1$ to $S_4$ so that the equation (7) is selected and the multi-pattern measured brightness value $C_7$ is calculated.

While the divided brightness measuring is periodically executed at an interval of about one second, the diaphragm gain controller 63 obtains a difference between the present average brightness value $B_{1234}$ and the previous average brightness value of $B_{1234}$. If this difference is larger than the threshold value $Th_4$ (e.g. 2 EV), it means that there is an abrupt change in the subject brightness or it means an abrupt panning. To deal with this, the diaphragm 5 is controlled at high speed and the gain control signal is sent to the variable gain amplifier 22.

If the difference between the present and previous average brightness values of $B_{1234}$ is smaller than the threshold value $Th_4$, it is judged if the equation selected by the measuring mode selecting unit 61 is different from the previously selected equation. If different, it means that, although there is no large change in the overall image brightness, the brightness distribution of the image changes, e.g., relatively slow panning or a slow motion of the subject. In such a case, although the image changes slowly (there is some continuity between scenes), there is an ample possibility that the multi-pattern measured brightness value changes discontinuously because of a switching between equations. If the diaphragm 5 is controlled at high speed so as to obtain a diaphragm aperture size corresponding to such a changing multi-pattern measured brightness value, the scene brightness may often change unnaturally. In view of this, the gain control signal is supplied to the variable gain amplifier 64 so as to lower the diaphragm change speed.

If the difference between the present and previous average brightness values of $B_{1234}$ is smaller than the

threshold value $Th_4$ and if the presently selected and previously selected equations are the same, then it means that there is no large difference of the overall image brightness and that the brightness distribution of the overall image does not change. Therefore, even if the diaphragm 5 is controlled at high speed, the image will not become unnatural. Accordingly, the diaphragm gain control unit 63 sends the gain control signal to the variable gain amplifier 64 so as to raise the diaphragm change speed.

The variable gain amplifier 64 changes the control speed of the diaphragm driver 50 in accordance with the gain control signal outputted from the diaphragm gain control unit 63. In accordance with the new control speed, the diaphragm driver 50 sets the diaphragm 5 to the diaphragm aperture size corresponding to the multi-pattern measured brightness calculated by the selected equation.

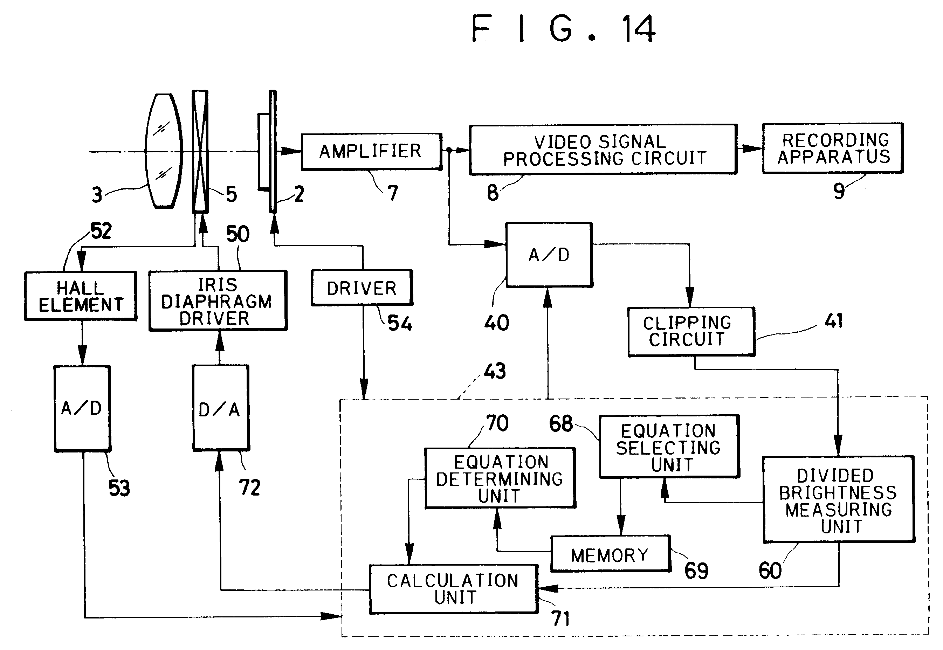

In the above embodiment, the multi-pattern brightness value is calculated by selecting an equation at each measuring. The multi-pattern measured brightness value may be calculated by selecting the same equation every predetermined time period and using it for respective measurings during such a time period. With this arrangement, the exposure control becomes stable, and natural images without fluctuation can be recorded. Figs.14 to 16 show such an embodiment. Elements similar to those shown in Fig.10 are represented by identical reference numerals. MPU 43 includes a divided brightness measuring unit 60, equation selecting unit 68, memory 69, equation determining unit 70 and calculation unit 71. Reference numeral 72 represents an A/D converter.

The equation selecting unit 68 discriminates a scene at each divided brightness measuring, selects one of the equations (1) to (7), and writes the type of the selected equation in the memory 69. The equation determining unit 70 derives from the memory 69 the equation most frequently selected during a predetermined period. The measured value calculation circuit 21 calculates a multi-pattern measured brightness value in accordance with the equation selected by the equation selecting circuit 20.

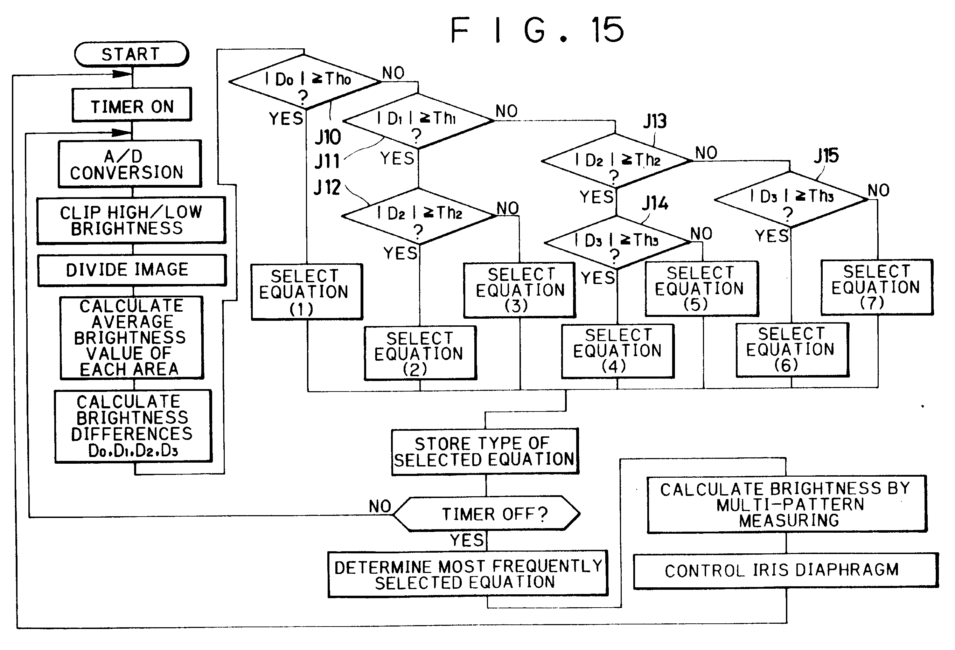

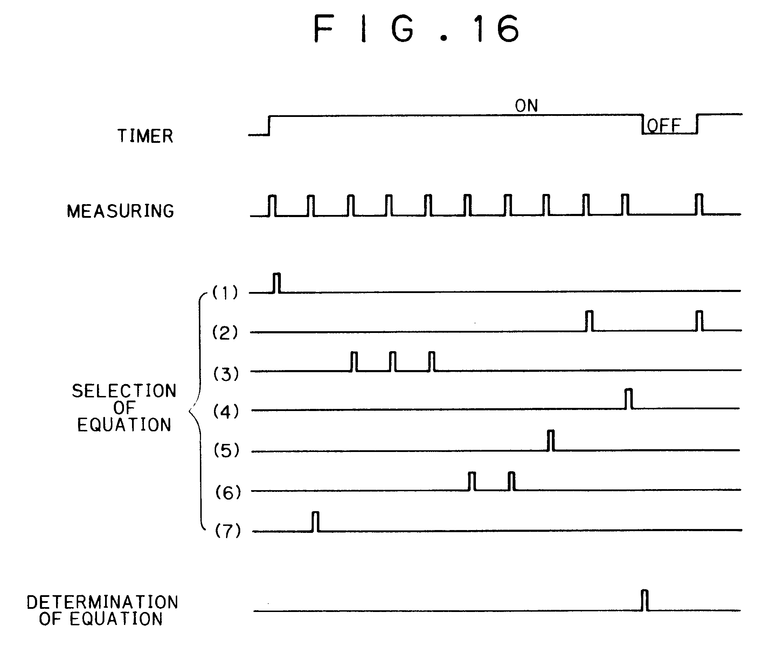

Next, the operation of the embodiment shown in Fig.14 will be described with reference to Figs.15 and 16. MPU 43 turns on an internal timer of MPU 43 in accordance with its program sequence. The image signal after being clipped is sent to the divided brightness measuring unit 60 to calculate average brightness values of respective areas as described previously. The equation selecting unit 68 compares the threshold values $Th_0$ to $Th_3$ with the absolute values $|D_0|$ to $|D_3|$ of the brightness differences $D_0$ to $D_3$ to discriminate a scene, and selects an optimum equation for that scene. The divided brightness measuring and equation selecting are repeated, for example, ten times until the timer is turned off (after 1/3 second) as shown in the timing chart of Fig.16, and each time the number of a selected equation is stored in the memory 69. At the same time when the timer is turned off, the equation determining unit 70 chooses the most frequently selected equation from the equations stored in the memory 69 (in the example shown in Fig.5, the equation (2)), and the number thereof is sent to the calculation unit 71. The calculation unit 71 calculates the multi-pattern measured brightness value at each divided brightness measuring by using the same equation until the next equation is determined. In this embodiment, therefore, the multi-pattern measured brightness value is calculated by using the same equation, and the equation is changed every 1/3 second. In accordance with the multi-pattern measured brightness value calculated by the calculation unit 71, MPU 43 drives the diaphragm 5 via the D/A converter 72 to set it at an optimum diaphragm aperture size.

If there are two or more frequently selected equations, it is preferable to determine the frequency by considering a plurality of equations selected during the previous measuring. Immediately after power-on, as it is not possible to determine the equation, it is preferable to select the equation (1), assuming that the image of a principal subject is located at the central area of a scene.

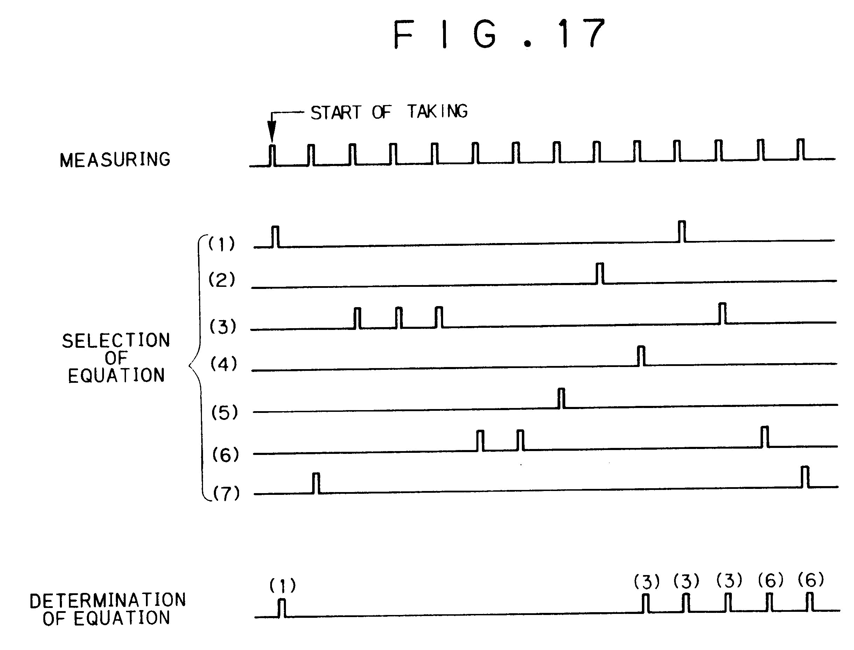

In the above embodiment, the equation is changed every predetermined period. Instead, a most frequently selected equation may be selected from a predetermined number of previously selected equations. With the selected equation being used, not only the change in the exposure control is smooth but also a minute change in consecutive scenes can be followed precisely. Fig.17 shows such an embodiment. Specifically, when an equation is newly selected at a certain measuring, nine equations previously selected at preceding measurings are considered in order to select therefrom the most frequently selected one. The average brightness values obtained at the present measuring are substituted in the selected equation to calculate the multi-pattern measured brightness value. If there are two or more frequently selected equations, the frequency may be determined by further considering a predetermined number of the equations before the nine equations.

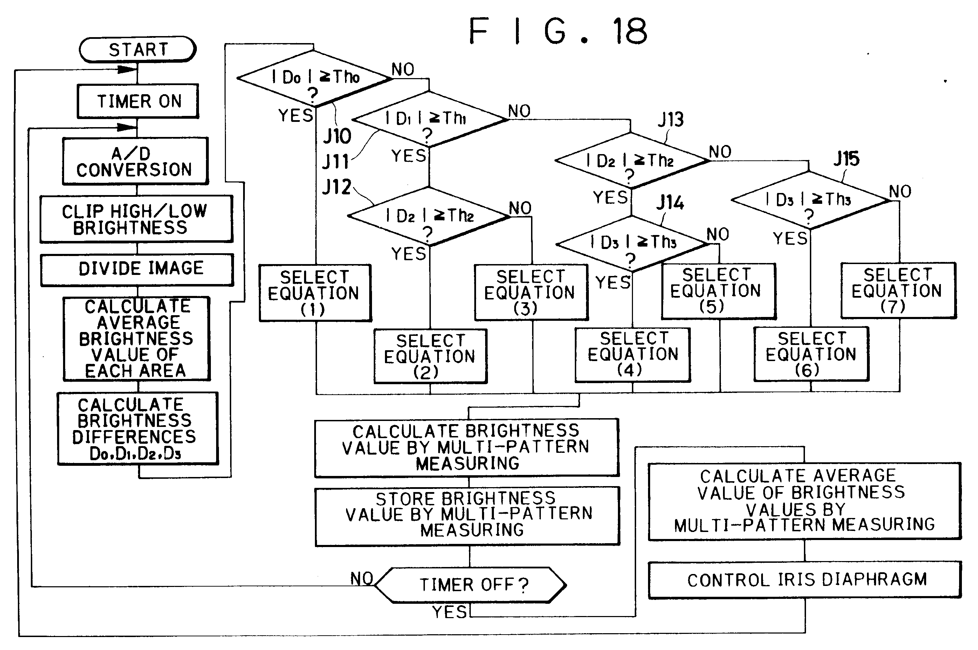

The above embodiments change the equation to be used. Instead, the scene brightness value may be changed each predetermined time period. Fig.18 shows such an embodiment. A plurality of measurings executed while the timer is turned on for a predetermined period (1/3 second), multi-pattern measured brightness values for respective measurings are calculated and stored in the memory. After a lapse of the predetermined period, the plurality of multi-pattern measured brightness values are read from the memory and its average value is calculated. In accordance with this average value, the diaphragm aperture size is controlled, and at this diaphragm aperture size, the next measurement for obtaining such an average value is executed as well as the calculation of the scene brightness value. It is also possible to perform the exposure control by calculating an average value taking into account a predetermined number of previous scene brightness values, as in the case of the embodiment shown in Fig.17.

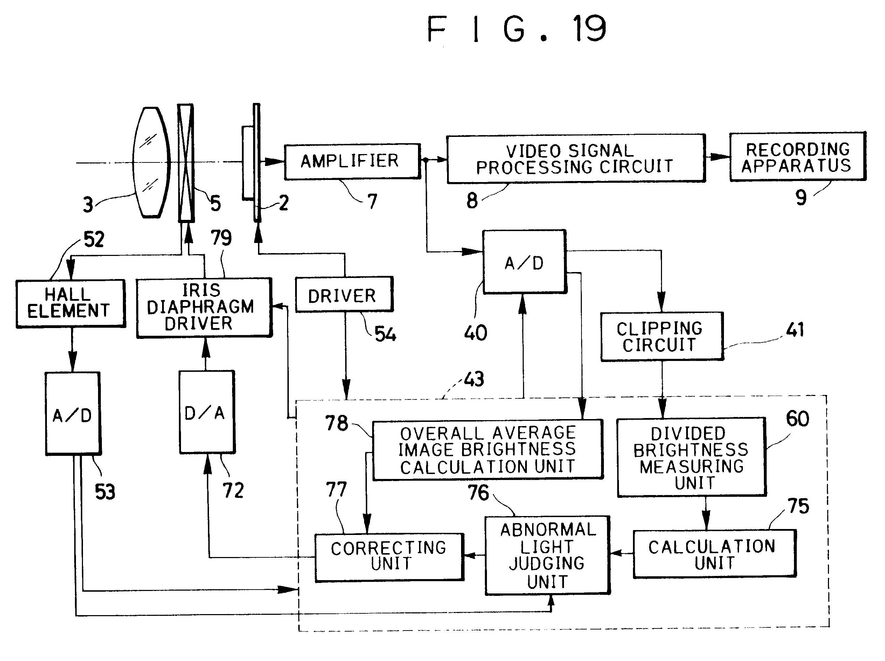

Figs.19 to 21 show an embodiment wherein, if the average brightness value of the central area is equal to or higher than that of the peripheral area by an amount of a predetermined threshold value and the diaphragm aperture size is small, then it is judged that an abnormal light is present at the central area of a scene and the multi-pattern measured brightness value is corrected so as to prevent the peripheral area from being too dark. Elements similar to those shown in Fig.14 are represented by identical reference numerals. With this arrangement, it is possible to avoid significant exposure failure for such scenes as might otherwise be adversely affected in the two modes switching method or multi-pattern measuring method.

MPU 43 shown as functional blocks is constructed of a divided brightness measuring unit 60, calculation unit 75, abnormal light judging unit 76, correcting unit 77, and overall image averaged brightness value calculation unit 78. The divided brightness measuring unit 60 calculates the averaged brightness value of each area as described before. The calculation unit 75 discriminates a scene by using the average brightness value of each area as described before, and selects one of the equations (1) to (7) prepared for respective types of scenes to calculate the multi-pattern measured brightness value C and calculate the multi-pattern measured brightness values $C_2$ and $C_7$ used for the detection of abnormal light.

The abnormal light judging means 76 compares the multi-pattern measured brightness values $C_2$ and $C_7$ calculated by the calculation unit 75, and judges, on the basis of whether the diaphragm 5 takes a small aperture size (e.g., f-number 8 or more) at the time of photometry, whether there is an abnormal light such as sun light within the area $S_1$. If an abnormal light is present, the multi-pattern measured brightness value $C_7$ is selected and sent to the correcting unit 77. On the other hand, if an abnormal light is not present, the multi-pattern measured brightness value C obtained through the scene discrimination is sent to the correction unit 77. The correcting unit 77 refers to the overall image averaged brightness value $C_0$ detected by the overall image brightness value calculation unit 78, and calculates a scene brightness value $C_E$ by correcting a brightness value outputted from the abnormal light judging unit 76. The correcting unit 77 which is connected to the diaphragm driver 79 via a D/A converter 72 drives the diaphragm 5 in accordance with the scene brightness value $C_E$. The drive speed of the diaphragm 5 is controlled so as to prevent the exposure amount of the principal subject from changing unstably, in accordance with the change amount of the scene brightness value $C_E$ and in accordance with the presence/absence of a continuity between scenes.

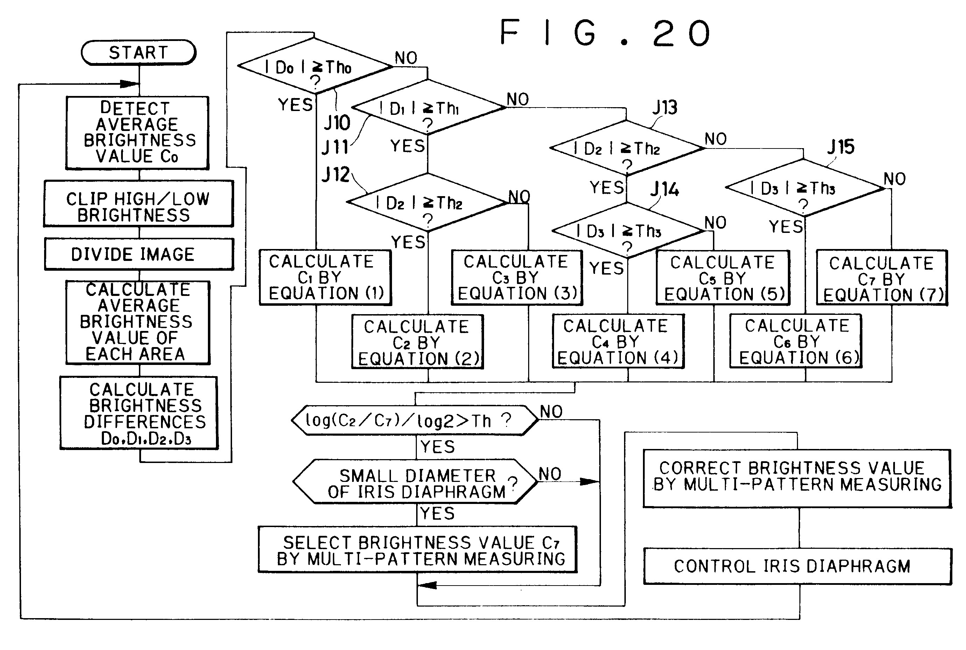

Next, the operation of the apparatus shown in Fig.19 will be described with reference to the flow chart shown in Fig.20. In accordance with the program sequence in MPU 43, the divided brightness measuring unit 60 calculates the average brightness value of each area. The calculation unit 75 discriminates a scene and calculates the multi-pattern measured brightness values C, $C_2$, and $C_7$ by using the average brightness values of respective areas.

The abnormal light judging unit 76 calculates a brightness difference $\log(C_2/C_7)/\log 2$ between the multi-pattern measured brightness values $C_2$ and $C_7$. The calculation result is compared with the threshold value Th (e.g., 3EV). If $\log(C_2/C_7)/\log 2 > $ Th , it means that there is a large brightness difference between the average brightness value $B_1$ of the area $S_1$ and the average brightness value $B_{1234}$ of the areas $S_1$ to $S_4$ such that this difference is larger than Th. However, it cannot be definitely judged that there is an abnormal light if the overall image brightness level is low. For this reason, the aperture size of the diaphragm 5 at the time of photometry is measured with the Hall element 52, and sent via the A/D converter 53 to the abnormal light judging unit 76 whereat it is judged if the diaphragm 5 is set at a small aperture size (e.g., f-number 8 or more). If the diaphragm 5 is set to a small aperture size, instead of the multi-pattern brightness value C obtained from the equation selected by the scene discrimination, the multi-pattern measured brightness value $C_7$ is sent to the correcting unit 77. If $\log(C_2/C_7)/\log 2 \leqq $ Th , it means that there is not a large brightness difference between the average brightness values $B_1$ and $B_{1234}$, so that the multi-pattern measured brightness value C obtained through the scene discrimination is sent to the correcting unit 77.

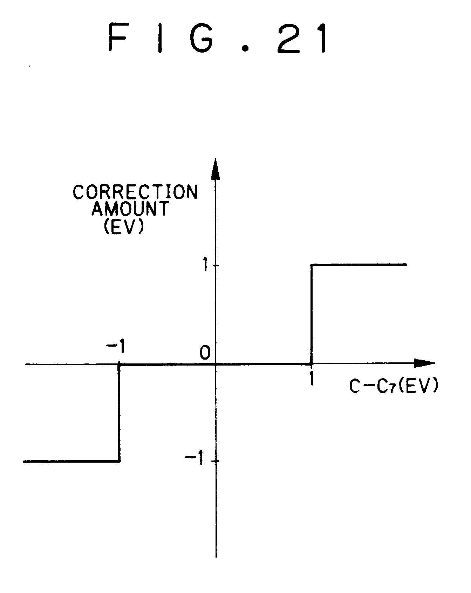

The multi-pattern measured brightness value C supplied to the correction unit 77 is corrected by correction amount clipping shown in Fig. 21, referring to the overall image averaged brightness value $C_0$ detected by the overall image averaged brightness value calculation unit 78. Specifically, if the difference between the multi-pattern measured brightness value C and the overall image averaged brightness value $C_0$ is equal to or smaller than 1 EV, the multi-pattern measured brightness value C per se is used. On the other hand, if the difference is larger than 1 EV, the correction amount for example $\pm$ 1 EV is added to the multi-pattern measured brightness value C. The aperture size of the diaphragm 5 is adjusted in accordance with the corrected scene brightness value $C_E$. MPU 43 compares the multi-pattern measured brightness values of $C_7$ calculated at the previous and present photometry, judges if the presently selected equation is the same as the previously selected equation, and sends such information to the diaphragm driver 79. If the brightness difference $C_S$ between the multi-pattern measured brightness values of $C_7$ at the previous and present photometry is equal to or larger than the predetermined threshold value $Th_S$ (e.g., 2 EV), it means a high speed panning or an abrupt change in subject brightness. Accordingly, the diaphragm driver 79 controls the diaphragm 5 at high speed correspondingly.

On the other hand, if the brightness difference $C_S$ is smaller than the threshold value $Th_S$, it is judged if the presently selected equation is different from the previously selected equation. If different, it means that there is only a slight change in overall image brightness and the brightness distribution of a scene changes, for example, it means a relatively slow panning or a slow motion of a subject. In such a case, there is an ample possibility that the eventual scene brightness value $C_E$ discontinuously changes due to a change in the equation, although the scene changes slowly (presence of continuity between scenes). Therefore, the diaphragm driver 79 controls the diaphragm 5 at low speed because there is an ample possibility that the brightness of a scene would change unnaturally if the diaphragm 5 were to be made to follow the scene brightness value $C_E$ at high speed. If the brightness difference $C_S$ is smaller than the threshold value $Th_S$ and the presently selected equation is the same as that selected previously, it means that there is no large change in overall image brightness, and that the brightness distribution of a frame does not change. In this case, even if the diaphragm 5 is controlled at high speed, there occurs no unnatural images. The diaphragm driver 24 therefore controls the diaphragm 5 at high speed.

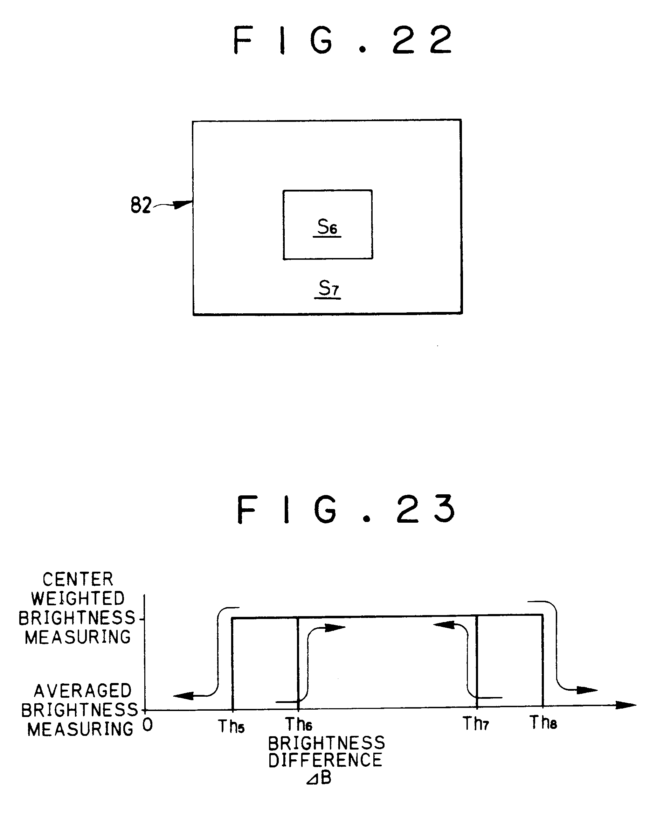

In the case where the difference between the normalized (or absolute) average brightness values at the central area and peripheral area is larger than a predetermined threshold value, it is possible to eliminate the influence by an abnormal light present within the central area by correcting the scene brightness value so as to prevent the peripheral area being dark. The normalized average brightness value means a brightness value of a subject which is made independent from the aperture size of the diaphragm. Figs.22 to 24 show such an embodiment. As shown in Fig.22, the frame 82 is divided into two areas, central area $S_6$ and peripheral area $S_7$. The normalized average brightness values $B_6$ and $B_7$ of respective areas are calculated by using photometric values taking into account the aperture size information at the time of photometry. In accordance with the difference $\Delta B$ between the normalized average brightness values $B_6$ and $B_7$, there is selected either the center weighted measuring mode using the normalized average brightness value $B_6$ or the averaged measuring mode using the normalized average brightness values $B_6$ and $B_7$ (or periphery weighted measuring mode using the normalized average brightness value $B_7$).

As shown in Fig.23, a threshold value $Th_5$ represents a transition from the center weighted measuring to the averaged brightness measuring for a general scene under a normal light including no subject of extraordinary high brightness. A threshold value $Th_6$ represents a transition from the averaged brightness measuring to the center weighted measuring. A threshold value $Th_7$ represents a transition from the averaged brightness measuring to the center weighted measuring in a scene having an abnormal light (e.g., sun light, and vehicle head lamp light) at the central area $S_6$. A threshold value $Th_8$ represents a transition from the center weighted measuring to the averaged brightness measuring in a scene having an abnormal light at the central area $S_6$. The threshold values are related by $0 < Th_5 < Th_6 < Th_7 < Th_8$, and they take values for example such as $Th_5 = 1\,EV$, $Th_6 = 2\,EV$, $Th_7 = 3\,EV$, and $Th_8 = 4\,EV$.

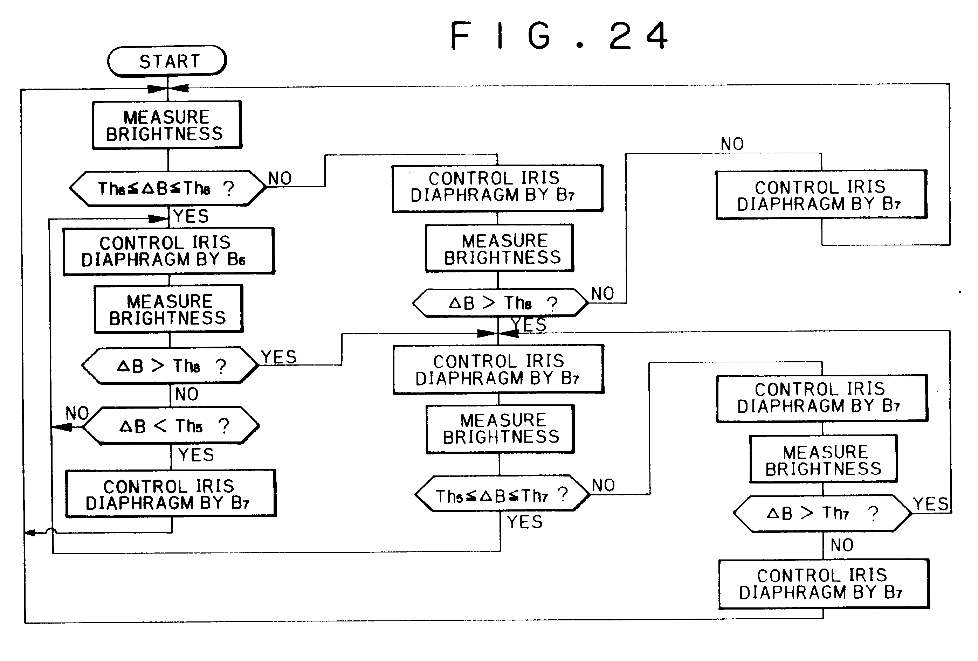

The embodiment will further be described with reference to the program sequence shown in Fig.24. Immediately after the start of picking up scenes, it is checked if the difference $\Delta B$ is between the two threshold values $Th_6$ and $Th_8$. If $Th_6 \leqq \Delta B \leqq Th_8$, the diaphragm is controlled by the center weighted measuring using the normalized average brightness value $B_6$ as shown in Fig.23. If not $Th_6 \leqq \Delta B \leqq Th_8$, the diaphragm is controlled by the averaged brightness measuring using the normalized average brightness value $B_7$. At the next photometry, it is judged if $\Delta B > Th_8$.

If the averaged brightness measuring was carried out at the previous photometry and if $\Delta B > Th_8$ at the present photometry, it means that an abnormal light was present at the central area $S_6$ at the previous photometry, so that the exposure control was made by the averaged brightness measuring in order to avoid under-exposure of the peripheral area $S_7$ which would be caused by the center weighted measuring. Such a scene is also present at the present photometry so that the diaphragm is controlled by using the normalized average brightness value $B_7$. If the averaged brightness measuring was carried out at the previous photometry and and if not $\Delta B > Th_8$ at the present photometry, it means that $\Delta B < Th_6$ has continued from the previous photometry. Since the brightness difference $\Delta B$ between the central area $S_6$ and peripheral area $S_7$ is small, the diaphragm is controlled in accordance with the normalized average brightness value $B_7$ in the same manner as previously.

If the center weighted measuring was carried out at the previous photometry and the present photometry results indicate $\Delta B > Th_8$, it means that the scene was switched and an abnormal light is present within the central area $S_6$. Accordingly, the measuring mode is switched to the averaged measuring mode and the diaphragm is controlled by using the normalized average brightness value $B_7$. If the present photometry results indicate not $\Delta B > Th_8$, it means the scene is similar to the previous one or the scene has changed to a scene having no brightness difference between the central area $S_6$ and peripheral area $S_7$. It is therefore judged if $\Delta B < Th_5$. If $\Delta B < Th_5$, it means that scene has changed to a scene having no brightness difference between the central area $S_6$ and peripheral area $S_7$, the measuring mode is switched to the averaged measuring mode and the diaphragm is controlled by using the normalized average brightness value $B_7$. If not $\Delta B < Th_5$, the scene is similar to the previous one so that the diaphragm is controlled also by using the normalized average brightness value $B_6$.

If $\Delta B > Th_8$ at the previous photometry and the averaged brightness measuring was carried out, it means that the scene has an abnormal light within the central area $S_6$ at the previous photometry. In this case, it is judged at the next photometry if $Th_5 \leqq \Delta B \leqq Th_7$. If $Th_5 \leqq \Delta B \leqq Th_7$, it means that the abnormal light disappeared so that the measuring mode is switched to the center weighted measuring mode to control the diaphragm by using the normalized average brightness value $B_6$. If not $Th_5 \leqq \Delta B \leqq Th_7$, the scene is similar to the previous one or the scene switched to a scene having no brightness difference between the central area $S_6$ and peripheral area $S_7$, so it is checked if $\Delta B > Th_7$.

IF $\Delta B > Th_7$, it means that the abnormal light is still present within the central area $S_6$ as at the previous photometry. Therefore, the diaphragm is controlled also by using the normalized average brightness value $B_7$. If not $\Delta B > Th_7$, it means that the scene changed to a scene having no brightness difference between the central area $S_6$ and peripheral area $S_7$. Therefore, the diaphragm is controlled by using the normalized average brightness value $B_7$, and the sequence control returns to the initial sequence at the next photometry. In this embodiment, an abnormal light is detected in accordance with the difference $\Delta B$ between normalized average brightness values of respective areas, and the measuring mode is switched correspondingly. Accordingly this embodiment can deal with not only an abnormal light such as sun light under a clear sky outdoors but also an abnormal light such as artificial illumination at night outdoors, or indoors.

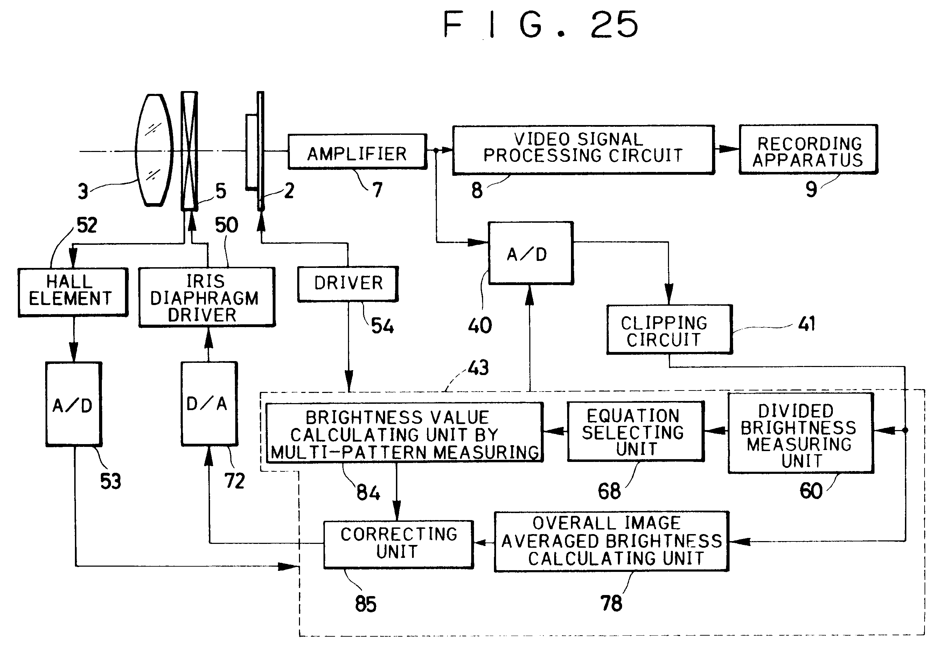

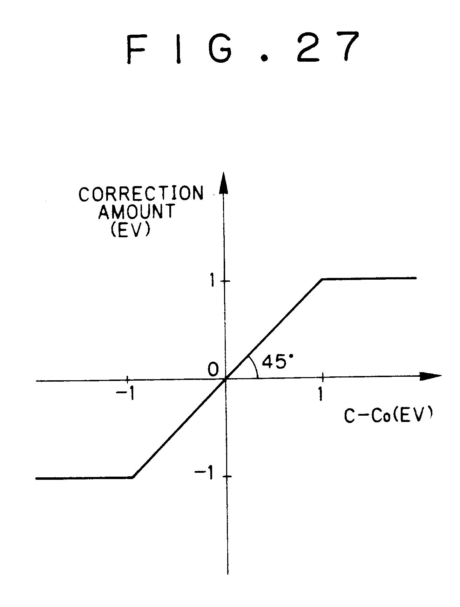

With a conventional multi-pattern measuring method, the measuring mode would in many cases automatically be switched to the center weighted measuring if the central area is considerable dark as compared with the peripheral area. A principal subject could be picked up with a proper brightness by the center weighted measuring if it were to be located within the central area of a scene. However, if a principal subject were to be located at the peripheral area, the principal subject would be over-exposure so that the reproduced image would have a very high brightness. It is possible in the embodiment shown in Figs. 25 to 27 to pick up a balanced, and natural image of a scene of the type such that the multi-pattern measuring would be used reverse-effectively, by preventing too high or low brightness at a portion of the background. MPU 43 shown as functional blocks is constructed of a divided brightness measuring unit 60, equation selecting unit 68, overall image averaged brightness calculating unit 78, brightness value calculating unit 84 through multi-pattern measuring, and correcting unit 85. The correcting unit 85 compares the overall image averaged brightness $C_0$ calculated by the overall image averaged brightness calculating unit 78 with the multi-pattern measured brightness value C outputted from the multi-pattern measured brightness value calculating unit 84, and if the difference therebetween is a predetermined threshold value, e.g., 1 EV, corrects the overall image averaged brightness value $C_0$ by using correction amount clipping shown in Fig.27. As shown in Fig.27, if the difference between the overall image averaged brightness value $C_0$ and the multi-pattern measured brightness value C is within $\pm$ 1 EV, as the correction amount for correcting the overall image averaged brightness value $C_0$, used is the difference between the overall image averaged brightness value $C_0$ and multi-pattern measured brightness value C. On the other hand, if the difference between the overall image averaged brightness value $C_0$ and the multi-pattern measured brightness value C is in excess of $\pm$ 1 EV, the correction amount for correcting the overall image averaged brightness value $C_0$ is clipped at $\pm$ 1 EV.

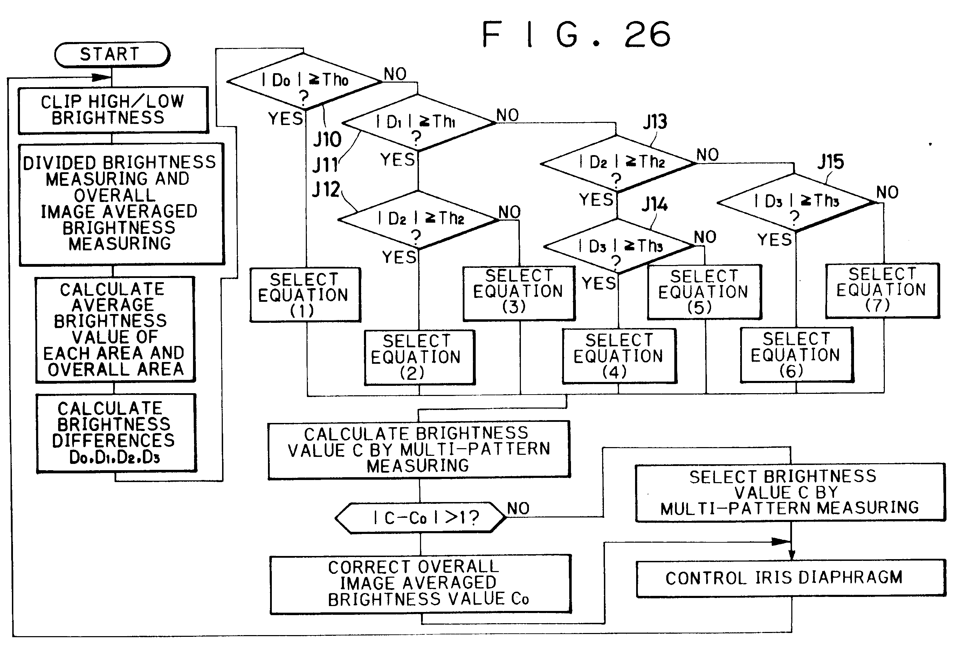

Next, the operation of the embodiment shown in Fig.25 will be described with reference to Fig.26. In the same manner as the previous embodiment, the multi-pattern measured brightness value C is calculated. The correcting unit 85 calculates the absolute value $|C - C_0|$ of the difference between the overall image averaged brightness value $C_0$ and the multi-pattern measured brightness value C, and compares the absolute value with the threshold value (e.g., 1 EV). If $|C - C_0| \leqq 1$, it means that there is little difference between the overall image averaged brightness value $C_0$ and the multi-pattern measured brightness value C, so that it is assumed as an ordinary scene pick-up, such as a scene pick-up under a clear sky in a front light. As shown in Fig.27, the brightness difference between the overall image averaged brightness value $C_0$ and the multi-pattern measured brightness value C is added as the correction value to the overall image averaged brightness value $C_0$. The corrected overall image averaged brightness value is the same as the multi-pattern measured brightness value C. Consequently, ultimately selected is the multi-pattern measured brightness value C itself. On the other hand, if $|C - C_0| > 1$, there is a large difference between the overall image averaged brightness value $C_0$ and the multi-pattern measured brightness value C. Therefore it can be assumed that for example particularly the central area of a scene is in high or low brightness and the principal subject is not located within the central area. In such a case, if the exposure control is carried out by using the multi-pattern measured brightness value C, the reproduced image of the principal subject may be painted black or white. In view of this, the exposure control is executed mainly by using the overall image averaged brightness value $C_0$, and supplementarily by using the multi-pattern measured brightness value C. The correction amount for correcting the overall image averaged brightness value $C_0$ is clipped at $\pm$ 1 EV. The clipped correction amount is used for correcting the overall image averaged brightness value $C_0$. The exposure control is executed in accordance with the scene brightness value $C_E$ outputted from the correcting unit 85. In this case, it apparently does not necessarily follow that the video output takes a standard 60 IRE. In this embodiment, the overall image averaged brightness value $C_0$ is used as an object for comparison with the multi-pattern measured brightness value C. The averaged brightness measuring value $B_{1234}$, for example, excepting the area $S_5$, center weighted measuring value and the like may also be used. The correction amount clipping is not limited only to that shown in Fig.27. For example, if $|C - C_0| \leqq 1$, the correction amount for correcting the overall image averaged brightness value $C_0$ may be set different from the difference between the overall image averaged brightness value $C_0$ and the multi-pattern measured brightness value C.

For continuous scenes, a smooth exposure control with a stepwise increased or decreased exposure correction amount will result in a more natural image even if the brightness distribution of a scene changes so long as the overall image averaged brightness value or an averaged brightness value excepting the area $S_5$ changes extraordinar-

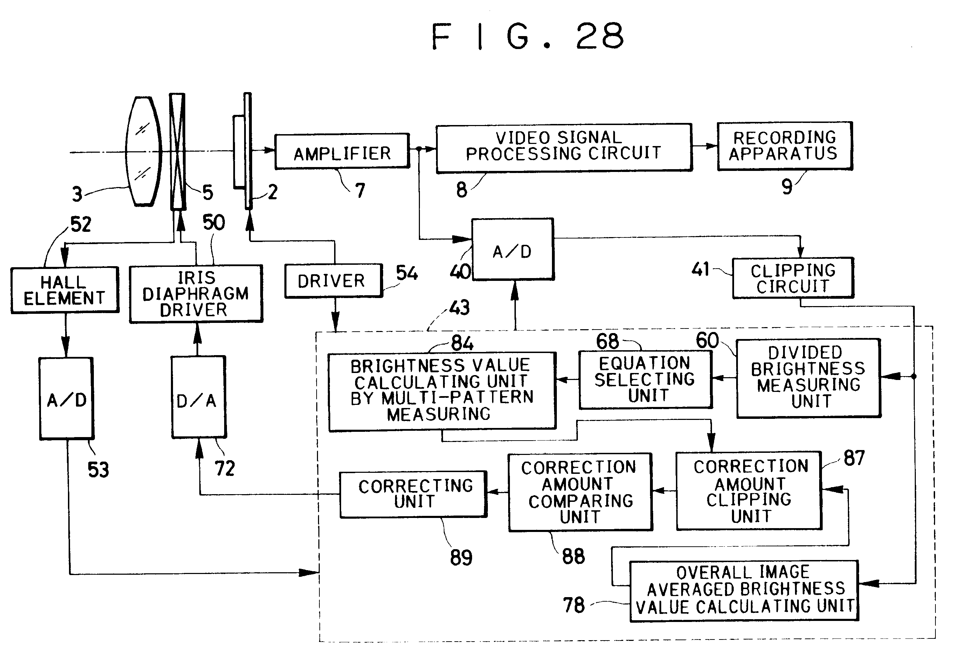

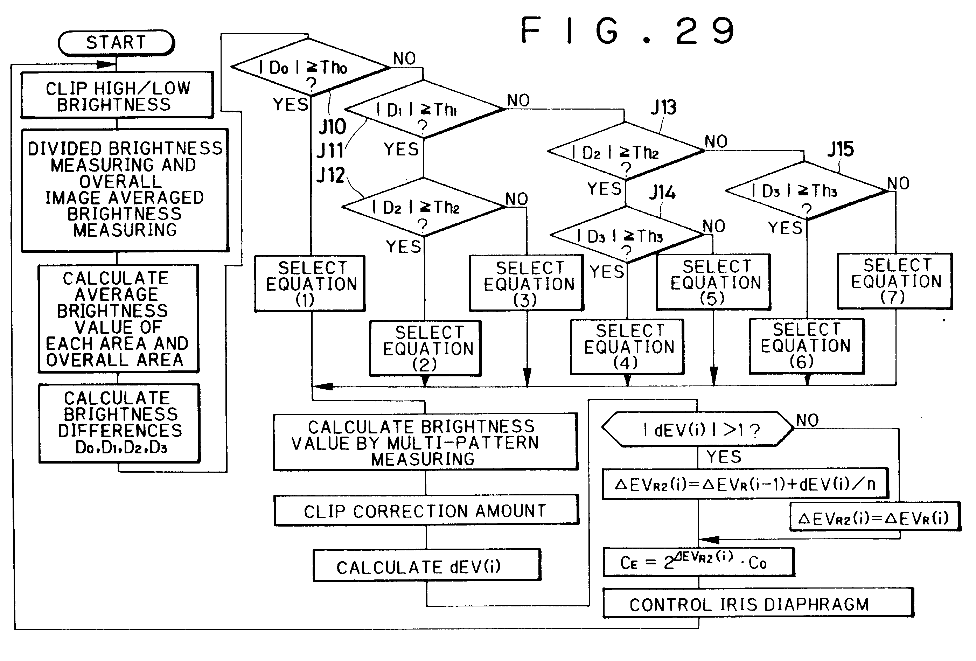

ily. Figs.28 to 30 show such an embodiment. MPU 43 is constructed of a divided brightness measuring unit 60, overall image averaged brightness value calculating unit 78, equation selecting unit 78, multi-pattern measured brightness value calculating unit 84, correction amount clipping unit 87, correction amount comparing unit 88, and correcting unit 89. The correction amount clipping unit 87 compares the overall image averaged brightness value $C_0$ calculated by the overall image averaged value calculating unit 78 with the multi-pattern measured brightness value $C$ outputted from the multi-pattern measured brightness value calculating unit 84, and calculates the correction amount $\Delta EV$ for the overall image averaged brightness value $C_0$ in association with the multi-pattern measured brightness value $C$ by the following equation. This correction amount $\Delta EV$ is calculated at a predetermined time interval (e.g., every 1/30 second).

$$\Delta EV = \log |C / C_0| / \log 2$$

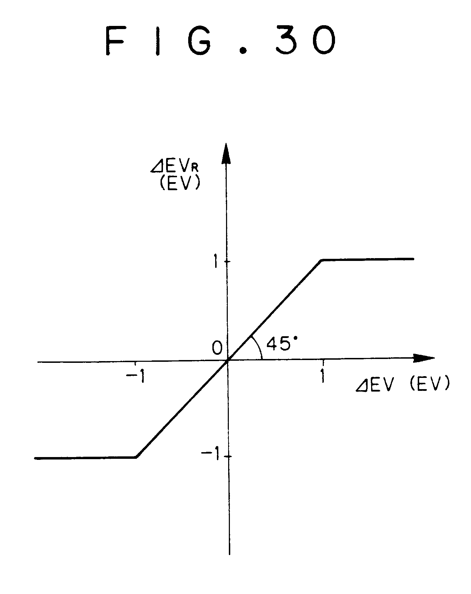

The obtained correction amount $\Delta EV$ is compared with a threshold value (e.g., 1 EV), and corrected to another correction value $\Delta EV_R$ by using the correction amount clipping shown in Fig.30. Namely, if $|\Delta EV| \leqq 1$, the correction amount $\Delta EV_R = \Delta EV$. If $|\Delta EV| > 1$, $|\Delta EV_R| = 1$. $\Delta EV_R$ is sent to the correction amount comparing circuit 22.

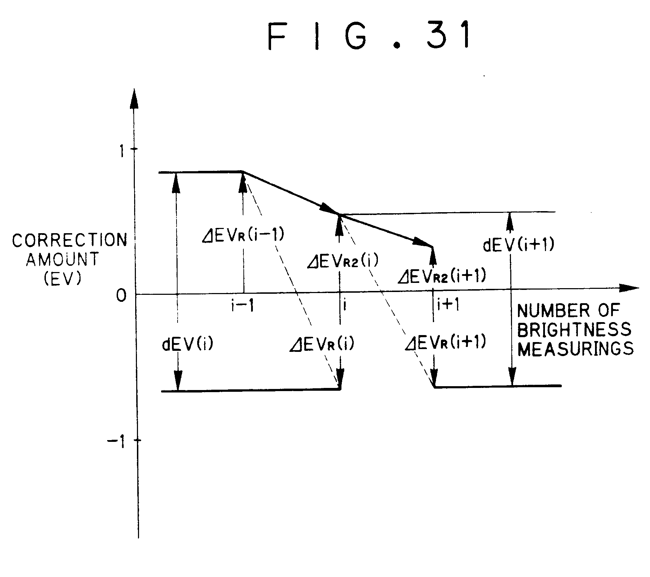

As shown in Fig.31, the correction amount obtained at the i-th time since the start of controlling the diaphragm is represented by $\Delta EV_R(i)$ . The correction amount comparing unit 88 compares $\Delta EV_R(i)$ with the previous $\Delta EV_R(i-1)$ to calculate the difference $dEV(i)$ therebetween. $|dEV(i)|$ is compared with the threshold value (e.g., 1 EV) to correct $\Delta EV_R(i)$ obtained from the correction amount clipping unit 87 and calculate the final correction amount $\Delta EV_{R2}(i)$. Such correction is carried out for example in the following manner, where $\underline{n}$ is an integer, e.g., from 5 to 10.

If $|dEV(i)| < 1$, then

$$\Delta EV_{R2}(i) = \Delta EV_R(i)$$

If $|dEV(i)| \geqq 1$, then

$$\Delta EV_{R2}(i) = \Delta EV_R(i-1) + dEV(i)/n$$

The correcting unit 89 corrects the overall image averaged brightness value $C_0$ by the final correction amount $\Delta EV_{R2}(i)$ to calculate the scene brightness value $C_E$. The diaphragm 5 is controlled in accordance with this scene brightness value $C_E$ which is given, for example, by the following equation:

$$C_E = C_0 \times 2^{\Delta EV_{R2}(i)}$$

The overall image averaged brightness value $C_0$ may be replaced with the averaged brightness measured value of a portion of a frame, or may be a brightness value obtained by the center weighted measuring.

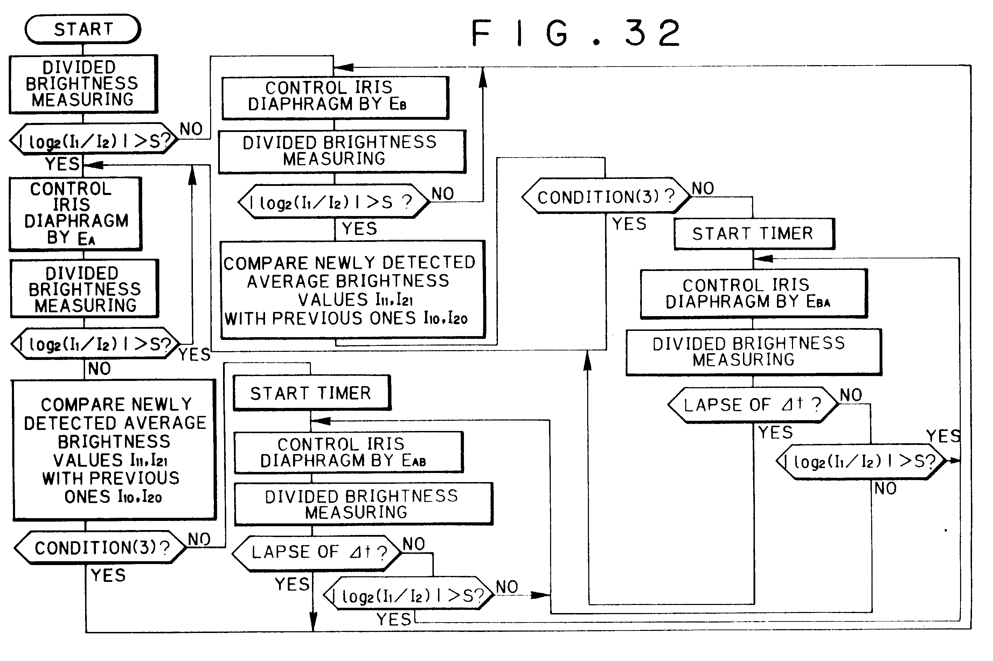

Figs.32 to 33 show an embodiment wherein if the presently selected equation is different from the previously selected equation, the previous weighting value is stepwise changed to obtain the scene brightness value. The frame 23 undergoes the divided brightness measuring to obtain the averaged brightness values $B_1$ to $B_4$ of areas $S_1$ to $S_4$ as shown in Fig.11. Using these averaged brightness values, obtained is the average brightness value $B_{234}$ of the areas $S_2$ to $S_4$. For simplifying the notation of symbols, $B_1$ is represented by $I_1$, and $B_{234}$ by $I_2$. If $|\log_2(I_1/I_2)| > S$ ($S$ is a threshold value, e.g., 2 EV). It is assumed that the principal subject is located within the central area. Accordingly, an equation (10) is selected to calculate the center weighted averaged brightness value $E_A$ to control the diaphragm 5. If not $|\log_2(I_1/I_2)| > S$ , there is only a small brightness difference between the central area and peripheral area. Accordingly an equation (11) is selected to calculate the overall image averaged brightness value $E_B$ to control the diaphragm 5. The equations (10) and (11) are as follows, where $W_{An}$ and $W_{Bn}$ are weighting values.

$$E_A = \sum_{n=1}^{5} W_{An} \times B_n / \sum_{n=1}^{5} W_{an} \qquad \text{Equation (10)}$$

$$E_B = \sum_{n=1}^{5} W_{Bn} \times B_n / \sum_{n=1}^{5} W_{Bn} \qquad \text{Equation (11)}$$

Next, a scene discrimination is executed to obtain a scene brightness value to control the diaphragm 5. Letting $I_{11}$ and $I_{21}$ be the presently obtained averaged brightness values $I_1$ and $I_2$, and $I_{10}$ and $I_{20}$ be the previous averaged

17

brightness values $I_1$ and $I_2$, the scene discrimination is carried out through the comparisons between these brightness values. TABLE 4 for scene discrimination is shown below, where $P_1$ and $P_2$ are given by the following equations. The threshold values $Th_1$ and $Th_2$ are, for example, 0.5 EV and 1 EV, respectively.

$$P_1 = |\log_2(I_{11}/I_{10})|$$

$$P_2 = |\log_2(I_{21}/I_{20})|$$

TABLE 4

| CONDITION (1) | CONDITION (2) | CONDITION (3) | CONDITION (4) |
|---|---|---|---|
| $P_1 \leqq Th_1$ | $P_1 > Th_1$ | $P_1 > Th_1$ | $P_1 \leqq Th_1$ |
| $P_2 > Th_2$ | $P_2 \leqq Th_2$ | $P_2 > Th_2$ | $P_2 \leqq Th_2$ |
| Change in Background | Motion of Main Subject | Scene Switched | No change |

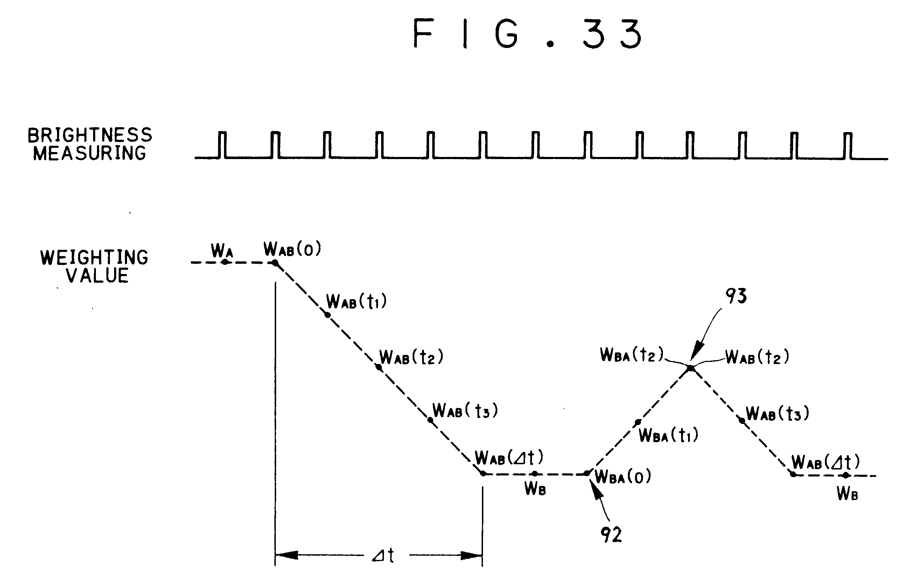

The condition (1) or (2) corresponds to the case where the measuring mode is switched without scene change and the brightness of the central area or peripheral area changes. The condition (1) corresponds to, for example, slow panning, and the condition (2) corresponds to picking up scenes on a stage with a video camera being fixed. In such a case, in order not to quickly change the scene brightness value calculated upon switching of the equation, weighting of the equation is stepwise changed. For example, the equation is arranged to be changed in the period of a plurality of frames, e.g., time $\Delta t$ corresponding to four frames, as shown in Fig.33. For example, in switching from the equation (10) to (11), the scene brightness value $E_{AB}(t)$ during switching is calculated by the following correction equation (12), where $\underline{t} = 0$ is the time when the switching starts.

$$E_{AB}(t) = \frac{\sum_{n=1}^{5} [W_{An} + (W_{Bn} - W_{An})/ \Delta t \times t] \times B_n}{\sum_{n=1}^{5} [W_{An} + (W_{Bn} - W_{An})/ \Delta t \times t]}$$

Correction Equation (12)

In switching from the equation (11) to (10), the scene brightness value $E_{BA}(t)$ is calculated by the following correction equation (13).

$$E_{BA}(t) = \frac{\sum_{n=1}^{5} [W_{Bn} + (W_{An} - W_{Bn})/ \Delta t \times t] \times B_n}{\sum_{n=1}^{5} [W_{Bn} + (W_{An} - W_{Bn})/ \Delta t \times t]}$$

Correction Equation (13)

Next, the description is directed to the case where the equation (10) was selected at the previous divided brightness measuring. First, the averaged brightness values $I_1$ and $I_2$ obtained at the present photometry are compared with each other. If $|\log_2(I_1/I_2)| > S$, the measuring mode is the same so that the equation (10) is selected to calculate the center weighted averaged brightness value $E_A$ and control the diaphragm 5. If $|\log_2(I_1/I_2)| \leqq S$, the measuring mode has changed so that a scene discrimination is executed.

MPU 43 checks if the condition (3) in TABLE 4 is satisfied ($P_1 > Th_1$ and $P_2 > Th_2$). If satisfied, it means that the scene has been switched so that the equation (11) is selected to calculate the overall image averaged brightness value $E_B$ and control the diaphragm 5. If the condition (3) is not satisfied, it means that, although the measuring mode has changed, the scene is similar. Accordingly, it is assumed that the condition (1) or (2) may be satisfied.

MPU 43 causes the internal timer to start. In order to make smooth the change in brightness value calculated upon switching of the equation, the brightness value $E_{AB}(t)$ is calculated by the correction equation (12) and the diaphragm 5 is controlled continuously and smoothly. Namely, immediately after the timer starts at $\underline{t} = 0$, $E_{AB}(0)$ is calculated. Next, $E_{AB}(t_1)$ is calculated in accordance with the average brightness values $B_1$ to $B_5$ obtained through the divided brightness measuring by the brightness signals of one frame newly read. In this manner, the measuring and calculation are repeated before a lapse of time $\Delta t$ to sequentially calculate brightness values $E_{AB}(t)$ and control the diaphragm 5.

The weighting values used for the correction equation (12) are given by:

$$\sum_{n=1} [W_{An} + (W_{Bn} - W_{An})/ \Delta t \times t]$$

With this weighting value representing as $W_{AB}(t)$, the weighting value $W_{AB}(t)$ changes from $W_{AB}(0)$ to $W_{AB}(t_1)$, $W_{AB}(t_2)$, $W_{AB}(t_3)$, and $W_{AB}(\Delta t)$ in this order during the time $\Delta t$, in which $W_{AB}(0) = W_A$, and $W_{AB}(\Delta t) = W_B$.

Similarly, the weighting value for the correction equation (13) is given by:

$$\sum_{n=1}^{5} [W_{Bn} + (W_{An} - W_{Bn})/ \Delta t \times t]$$

With this weighting value representing as $W_{BA}(t)$, the weighting value $W_{BA}(t)$ changes from $W_{BA}(0)$ to $W_{BA}(t_1)$, $W_{BA}(t_2)$, $W_{BA}(t_3)$, and $W_{BA}(\Delta t)$ in this order during the time $\Delta t$, where $W_{BA}(0) = W_B$, and $W_{BA}(\Delta t) = W_A$.

A change in the measuring mode during the time $\Delta t$ is checked at each new photometry. If the measuring mode is changed before the lapse of the time $\Delta t$, the correction equation (12) is changed to the correction equation (13) at that time.

The foregoing description is directed to the case where the equation (10) is selected initially. The exposure control for the case where the equation (11) is selected first can be executed by quite the same sequence, so the description is omitted.

As an example of a change in the measuring mode during the time $\Delta t$, there is the case where a principal subject under spot light illumination on a stage is located at one end of the frame (the weighting value is $W_B$), moves to the center of the scene, passes quickly and reaches the opposite end before the lapse of the time $\Delta t$.

This case will be clarified with reference to the timing chart shown in Fig.33. At a point 92, the principal subject starts moving toward the central area from one end of the frame so that MPU 43 selects the correction equation (13) to calculate the scene brightness value $E_{BA}(0)$ having a weighting value $W_{BA}(0)$ and control the diaphragm 5. At a point 93 after a lapse of time $t_2$, the principal subject passes the central area and is moving toward the other end of the frame so that MPU 43 selects the correction equation (12) to calculate the scene brightness value $E_{AB}(t_2)$ having a weighting value $W_{AB}(t_2)$ and control the diaphragm 5. As the time further lapses, the scene brightness values $E_{AB}(t_3)$ and $E_{AB}(\Delta t)$ (= $E_B$) are sequentially calculated to control the diaphragm 5 in accordance with the obtained scene brightness values. It is noted that the measuring mode is not limited only to the center weighted measuring mode, and averaged measuring mode, but that a larger number of other measuring modes may be used.

In the above embodiments, the exposure control is executed by using the diaphragm. Instead, the charge accumulation time of an image sensor may be changed for exposure control. The invention is also applicable to a continuous pick-up mode of a still video camera.

Although the present invention has been fully described by way of the preferred embodiments thereof with reference to the accompanying drawings, various changes and modifications within the scope of the appended claims will be apparent to those of working skill in this field.

**Claims**

1. An exposure control apparatus having

   an image sensor (2) for picking up a scene and generating a video signal, and

   adjusting means for adjusting an exposure amount of the image sensor,

   said adjusting means comprising means for detecting a change of said video signal, and

   means for changing exposure control speed in response to said change of said video signal, **characterized in that**

said detecting means are adapted to detect a change in continuity of a scene on the basis of changes of video signals of different areas (23A, 23B) in a pick-up frame (23) of said image sensor (2); and

said exposure control speed changing means comprise an iris diaphragm (5) and are adapted to stepwise change the exposure control speed by changing the driving speed for adjustment of said iris diaphragm in response to a scene continuity change so as to drive said iris diaphragm at low speed when said scene is continuous, and to drive said iris diaphragm at high speed when said scene has been changed abruptly.

2. An exposure control apparatus according to claim 1, wherein said detecting means are adapted to evaluate a time sequential change of said video signals corresponding to at least two different areas of said pick-up frame.

3. An exposure control apparatus according to at least one of claims 1 or 2, wherein said speed changing means selectively switches said control speed between two steps of low and high speeds.

4. An exposure control apparatus according to at least one of claims 1-3, wherein said two different areas are a nearly overall image area (23B) and a central image area (23A).

5. An exposure control apparatus according to at least one of the claims 2-4, wherein said detecting means judges a change of continuity of said scene by evaluating a change in brightness of one of that two different areas (23A, 23B) and a change in brightness of the other of said two different areas (23A, 23B).

6. An exposure control apparatus according to at least one of the claims 2-5, wherein said detecting means judges a change of continuity of said scene by evaluating a difference between a change in brightness of one of said two different areas (23A, 23B) and a change in brightness of the other of said two different areas (23A, 23B).

7. An exposure control method for a video camera for picking up a scene with an image sensor (2) converting an optical image into video signals, wherein

an exposure amount of the image sensor is adjusted based on detecting a change in illumination amount of said video signals and

changing exposure amount control speed in response to said change,
**characterized by** the steps of:

detecting a change of continuity of said scene on the basis of changes of video signals of different areas (23A, 23B) in a pick-up frame (23) of said image sensor (2), and

stepwise changing the exposure amount control speed by accordingly changing the driving speed for adjustment of an iris diaphragm placed in front of said image sensor, in response to said scene continuity change so as to drive said iris diaphragm at low speed when said scene is continuous, and to drive said iris diaphragm at high speed when said scene has been changed.

8. An exposure control method according to claim 7, comprising the further steps of:

measuring average brightness values respectively of a plurality of areas (S1-S5) in accordance with video signals corresponding to said respective areas by dividing a pick-up frame of said image sensor (2) into said plurality of areas (S1-S5);

selecting one of a plurality of equations (1-7) each having a different weighting by comparing said average brightness values of said respective areas;

calculating a scene brightness value by using said selected equation; and

determining the exposure control speed in accordance with a change amount of said scene brightness values and in accordance with the presence of a continuity between aspects of said scene.

9. An exposure control method according to claim 7, comprising the steps of:

periodically measuring average brightness values respectively of a plurality of areas (S1-S5) in accordance with video signals corresponding to said respective areas by dividing the pick-up frame of said image sensor (2) into said plurality of areas (S1-S5);

selecting one of a plurality of equations (1-7) each having a different weighting by comparing said average brightness values of said respective areas (S1-S5);

determining a most frequently selected equation of equations selected during a predetermined period;

calculating a scene brightness value for each measurement by using said determined equation which is to be used until another determination is made; and adjusting an exposure amount of said image sensor (2) in accordance with said scene brightness value.

**10.** An exposure control method according to claim 7, comprising the steps of:

periodically measuring average brightness values respectively of a plurality of areas (S1-S5) in accordance with video signals corresponding to said respective areas by dividing the pick-up frame of said image sensor (2) into said plurality of areas (S1-S5);

calculating a scene brightness value at each measurement in accordance with selecting one of a plurality of equations (1-7) each having a different weighting by comparing said average brightness values of said respective areas;

obtaining an average value of scene brightness value selected during a predetermined period; and adjusting an exposure amount of said image sensor in accordance with said average value.

**11.** An exposure control method for a video camera according to at least one of the claims 7-10 wherein a pick-up frame is divided into a plurality of areas (S1-S5), and if the average brightness value of the central area (S1) of the pick-up frame is higher than the average brightness value of the peripheral area of the pick-up frame, then a scene brightness value used for the exposure control is calculated by a center weighted measuring, said method comprising the steps of:

judging that, if the average brightness value of said central area (S1) is higher than the average brightness value of said peripheral area by a difference larger than a predetermined threshold value and the aperture size of a diaphragm (5) is small, then an abnormal light is present within said central area (S1); and

correcting said scene brightness value so as to prevent said peripheral area from being too dark when said abnormal light is judged to be present.

**12.** An exposure control method for a video camera according to at least one of the claims 7-10 wherein a pick-up frame is divided into a plurality of areas (S1-S5), and if the average brightness value of a central area (S1) of the pick-up frame is higher than the average brightness value of the peripheral area of the pick-up frame, then a scene brightness value used for the exposure control is calculated by a center weighted measuring, said method comprising the steps of:

judging, by comparing a normalized average brightness value of said central area (S1) with a normalized average brightness value of said peripheral area, that an abnormal light is present within said central area if a difference between said normalized average brightness values is larger than a predetermined threshold value, said normalized average brightness values having been obtained by considering diaphragm information; and

correcting said scene brightness value so as to prevent said peripheral area from being too dark when said abnormal light is judged to be present.

**13.** An exposure control method for a video camera according to at least one of the claims 7-10 wherein a pick-up frame is divided into a plurality of areas (S1-S5) to obtain average brightness values of respective areas, the average brightness values are compared with each other to select one of a plurality of equations (1-7) each having a different weighting value, and a multi-pattern measured brightness value is calculated in accordance with the selected equation, said method comprising the steps of:

obtaining a first average brightness value from a specific partial area or the overall area of said pick-up frame simultaneously with obtaining said multi-pattern measured brightness value;

judging whether said first average brightness value is different from said multi-pattern measured brightness value by a difference equal to or larger than a predetermined threshold value; and

executing an exposure control in accordance with a corrected average brightness value based on correcting said first average brightness value by an amount not in excess of a predetermined value if said difference is equal to or larger than said predetermined threshold value.

**14.** An exposure control method for a video camera according to at least one of the claims 7-10 wherein the exposure control is executed in accordance with a first average brightness value obtained from a nearly overall area or a specific partial area of a pick-up frame, the pick-up frame is divided into a plurality of areas (S1-S5), the average brightness values of respective areas are compared with each other to calculate a multi-pattern measured brightness value, and, if the first average brightness value is different from the multi-pattern measured brightness value by a difference equal to or larger than a predetermined threshold value, the first average brightness value is corrected by a correction amount not in excess of a predetermined value, and the exposure control is executed in accordance with the corrected first average brightness value, said method comprising the steps of:

correcting a previous correction amount in accordance with a difference between a correction amount newly calculated during a continuous scene pick-up and said previous correction amount if said difference is equal to or larger than a predetermined threshold value; and

correcting said first average brightness value in accordance with said corrected correction amount.

15. An exposure control method for a video camera according to at least one of the claims 7-10 wherein average brightness values obtained from a plurality of areas (S1-S5) of a pick-up frame are compared with each other to select one of a plurality of equations (1-7) each having a different weighting value to be used for the average brightness value for each area, and a scene brightness value to be used for the exposure control is calculated in accordance with the selected equation, comprising the step of:

calculating said scene brightness value while making a weighting value for a previously selected equation gradually come close to a weighting value for a newly selected equation if said newly selected equation during a continuous scene pick-up is different from said previously selected equation.

**Patentansprüche**

**1.** Belichtungskontrollvorrichtung mit

einem Bildsensor (2) zum Aufnehmen einer Szene und zum Erzeugen eines Videosignals, und

einer Justiereinrichtung zum Einstellen eines Belichtungsbetrags des Bildsensors,

wobei die Justiereinrichtung eine Einrichtung zum Detektieren einer Änderung des Videosignals, und

eine Einrichtung zum Ändern der Belichtungssteuerungsgeschwindigkeit in Abhängigkeit von der Änderung des Videosignals umfasst,
**dadurch gekennzeichnet**, dass

die Detektiereinrichtung ausgebildet ist, eine Kontinuitätsänderung einer Szene auf der Grundlage von Änderungen von Videosignalen von verschiedenen Bereichen (23A, 23B) in einem Bildaufnahmebereich (23) des Bildsensors (2) zu erfassen; und

dass die Belichtungssteuerungsgeschwindigkeitsänderungseinrichtung eine Irisblende (5) umfasst und ausgebildet ist, um schrittweise die Belichtungssteuerungsgeschwindigkeit zu ändern, indem die Antriebsgeschwindigkeit zum Justieren der Irisblende in Reaktion auf eine Kontinuitätsänderung in einer Szene geändert wird, wobei die Irisblende mit einer geringen Geschwindigkeit bewegt wird, wenn die Szene kontinuierlich ist, und wobei die Irisblende mit hoher Geschwindigkeit bewegt wird, wenn die Szene abrupt geändert worden ist.

2. Eine Belichtungskontrollvorrichtung gemäß Anspruch 1, wobei die Detektiereinrichtung ausgebildet ist, eine Zeitenfolgenänderung der Videosignale, die zumindest zwei verschiedenen Bereichen des Bildaufnahmebereichs entsprechen, zu bestimmen.

3. Eine Belichtungskontrollvorrichtung gemäß wenigstens einem der Ansprüche 1 oder 2, wobei die Geschwindigkeitsänderungseinrichtung die Steuergeschwindigkeit selektiv zwischen zwei Schritten von kleinen und großen Geschwindigkeiten umschaltet.

4. Eine Belichtungskontrollvorrichtung gemäß wenigstens einem der Ansprüche 1 bis 3, wobei die zwei verschiedenen Bereiche ein näherungsweise gesamter Bildbereich (23B) und ein zentraler Bildbereich (23A) sind.

5. Eine Belichtungskontrollvorrichtung gemäß zumindest einem der Ansprüche 2 bis 4, wobei die Detektiereinrichtung eine Kontinuitätsänderung der Szene beurteilt, indem eine Helligkeitsänderung einer dieser zwei unterschiedlichen Bereiche (23A, 23B) und eine Helligkeitsänderung des anderen der zwei unterschiedlichen Bereiche (23A, 23B) bestimmt wird.

6. Eine Belichtungskontrollvorrichtung gemäß zumindest einem der Ansprüche 2 bis 5, wobei die Detektiereinrichtung eine Kontinuitätsänderung der Szene beurteilt, indem ein Unterschied zwischen einer Helligkeitsänderung einer der beiden unterschiedlichen Bereiche (23A, 23B) und eine Helligkeitsänderung des anderen der beiden unterschiedlichen Bereiche (23A, 23B) bestimmt wird.

7. Belichtungskontrollverfahren für eine Videokamera zum Aufnehmen einer Szene mit einem Bildsensor (2), der ein optisches Bild in Videosignale umwandelt, wobei

ein Belichtungsbetrag des Bildsensors basierend auf dem Erfassen einer Anderung im Beleuchtungsbetrag der Videosignale und

Andem des Betrags der Belichtungssteuerungsgeschwindigkeit in Abhängigkeit von besagter Änderung justiert wird,

**gekennzeichnet durch** die Schritte:

Erfassen einer Kontinuitätsänderung der Szene auf der Grundlage von Änderungen des Videosignals von verschiedenen Bereichen (23A, 23B) in einem Bildaufnahmebereich (23) des Bildsensors (2), und

schrittweise Ändern der Belichtungsbetragssteuerungsgeschwindigkeit durch entsprechendes Ändern der Antriebsgeschwindigkeit zum Einstellen einer Irisblende, die vor dem Bildsensor angeordnet ist, in Abhängigkeit zur Änderung der Szenenkontinuität, um die Irisblende mit geringer Geschwindigkeit zu bewegen, wenn die Szene kontinuierlich ist, und um die Irisblende mit hoher Geschwindigkeit zu bewegen, wenn die Szene geändert worden ist.

8. Ein Belichtungskontrollverfahren gemäß Anspruch 7, das weiterhin die Schritte umfasst:

Messen von Durchschnittshelligkeitswerten jeweils von einer Vielzahl von Bereichen (S1-S5) in Übereinstimmung mit Videosignalen, die jeweils den Bereichen entsprechen, indem ein Bildaufnahmebereich des Bildsensors (2) in die Vielzahl von Bereichen (S1-S5) unterteilt wird;

Auswählen einer Gleichung aus einer Vielzahl von Gleichungen (1-7), wobei jede eine unterschiedliche Gewichtung besitzt, indem die Durchschnittshelligkeitswerte der entsprechenden Gebiete verglichen werden;

Berechnen eines Szenenhelligkeitswertes unter Verwendung der ausgewählten Gleichung; und

Bestimmen der Belichtungssteuerungsgeschwindigkeit in Übereinstimmung mit einem Änderungsbetrag der Szenenhelligkeitswerte und in Übereinstimmung mit dem Vorhandensein einer Kontinuität zwischen Aspekten der Szene.

9. Ein Belichtungskontrollverfahren gemäß Anspruch 7, das die Schritte umfasst:

periodisches Messen von Durchschnittshelligkeitswerten jeweils von einer Vielzahl von Gebieten (S1-S5) in Übereinstimmung mit Videosignalen, die den jeweiligen Gebieten entsprechen, indem der Bildaufnahmebereich des Bildsensors (2) in die Vielzahl von Gebieten (S1-S5) unterteilt wird;

Auswählen einer Gleichung aus einer Vielzahl von Gleichungen (1-7), wobei jede eine unterschiedliche Gewichtung besitzt, indem die Durchschnittshelligkeitswerte der entsprechenden Gebiete (S1-S5) verglichen werden;

Bestimmen einer am häufigsten ausgewählten Gleichung aus Gleichungen, die während einer vorbestimmten Dauer ausgewählt sind;

Berechnen eines Szenenhelligkeitswertes für jede Messung unter Verwendung der vorbestimmten Gleichung, die zu verwenden ist bis eine weitere Bestimmung durchgeführt wird; und

Justieren eines Belichtungsbetrags des Bildsensors (2) in Übereinstimmung mit dem Szenenhelligkeitswert.

10. Ein Belichtungskontrollverfahren gemäß Anspruch 7, das die Schritte umfasst:

periodisches Messen von Durchschnittshelligkeitswerten jeweils von einer Vielzahl von Gebieten (S1-S5) in Übereinstimmung mit Videosignalen, die den jeweiligen Gebieten entsprechen, indem der Bildaufnahmebereich des Bildsensors (2) in die Vielzahl von Gebieten (S1-S5) unterteilt wird;

Berechnen eines Szenenhelligkeitswertes bei jeder Messung in Übereinstimmung mit einem Auswählen einer Gleichung aus einer Vielzahl von Gleichungen (1-7), wobei jede eine unterschiedliche Gewichtung besitzt, indem die Durchschnittshelligkeitswerte der jeweiligen Gebiete verglichen werden;

Erhalten eines Durchschnittswertes eines Szenenhelligkeitswertes, der während einer vorbestimmten Dauer ausgewählt wurde; und

Einstellen eines Belichtungsbetrages des Bildsensors in Übereinstimmung mit dem Durchschnittswert.

11. Ein Belichtungskontrollverfahren für eine Videokamera gemäß wenigstens einem der Ansprüche 7 bis 10, wobei ein Bildaufnahmebereich in eine Vielzahl von Gebieten (S1-S5) unterteilt wird, und wenn der Durchschnittshelligkeitswert des zentralen Bereichs (S1) des Bildaufnahmebereichs größer als der Durchschnittshelligkeitswert des peripheren Bereichs des Bildaufnahmebereichs ist, dann wird ein für die Belichtungskontrolle verwendeter Szenenhelligkeitswert mittels einer mittelpunktsgewichteten Messung berechnet, wobei das Verfahren die Schritte umfasst:

Beurteilen, dass, wenn der Durchschnittshelligkeitswert des zentralen Bereichs (S1) um eine Differenz, die größer als ein vorbestimmter Schwellwert ist, größer als der Durchschnittshelligkeitswert des peripheren Bereichs ist und die Aperturgröße einer Blende (5) klein ist, dann abnormales Licht innerhalb des zentralen Bereichs (S1) vorhanden ist; und

Korrigieren des Szenenhelligkeitswertes, um zu verhindern, dass der periphere Bereich zu dunkel ist, wenn beurteilt wird, dass das abnormale Licht vorhanden ist.

12. Ein Belichtungskontrollverfahren für eine Videokamera gemäß zumindest einem der Ansprüche 7 bis 10, wobei ein Bildaufnahmebereich in eine Vielzahl von Bereichen (S1-S5) unterteilt wird, und wobei, wenn der Durchschnittshelligkeitswert eines zentralen Bereichs (S1) des Bildaufnahmebereichs größer ist als der Durchschnittshelligkeitswert des peripheren Bereichs des Bildaufnahmebereichs, ein zur Belichtungssteuerung verwendeter Szenenhelligkeitswert durch eine mittelpunktsgewichtete Messung berechnet wird, wobei das Verfahren die Schritte umfasst:

Beurteilen durch Vergleichen eines normalisierten Durchschnittshelligkeitswertes des zentralen Bereichs (S1) mit einem normalisierten Durchschnittshelligkeitswert des peripheren Bereichs, dass ein abnormales Licht in dem zentralen Bereich vorhanden ist, wenn ein Unterschied zwischen den normalisierten Durchschnittshelligkeitswerten größer als ein vorbestimmter Schwellwert ist, wobei die normalisierten Durchschnittshelligkeitswerte durch Berücksichtigung von Blendeninformationen erhalten worden sind; und

EP 0 409 161 B1

Korrigieren des Szenenhelligkeitswertes, um zu vermeiden, dass der periphere Bereich zu dunkel wird, wenn beurteilt wird, dass das abnormale Licht vorhanden ist.

**13.** Ein Belichtungskontrollverfahren für eine Videokamera gemäß zumindest einem der Ansprüche 7 bis 10, wobei ein Bildaufnahmebereich in eine Vielzahl von Bereichen (S1-S5) unterteilt wird, um Durchschnittshelligkeitswerte von jeweiligen Gebieten zu erhalten, wobei die Durchschnittshelligkeitswerte untereinander verglichen werden, um eine Gleichung von einer Vielzahl von Gleichungen (1-7) jeweils mit einem unterschiedlichen Gewichtungswert auszuwählen, und wobei ein Mehrfachmusterhelligkeitsmesswert in Übereinstimmung mit der ausgewählten Gleichung berechnet wird, wobei das Verfahren die Schritte umfasst:

Erhalten eines ersten Durchschnittshelligkeitswertes aus einem speziellen Teilbereich oder dem gesamten Bereich des Bildaufnahmebereichs gleichzeitig mit dem Erhalten des Mehrfachmusterhelligkeitsmesswertes;

Beurteilen, ob der erste Durchschnittshelligkeitswert sich von dem Mehrfachmusterhelligkeitsmesswert um eine Differenz unterscheidet, die gleich oder größer als ein vorbestimmter Schwellwert ist; und

Ausführen einer Belichtungssteuerung in Übereinstimmung mit einem korrigierten Durchschnittshelligkeitswert auf der Grundlage des Korrigierens des ersten Durchschnittshelligkeitswertes um einen Betrag, der einen vorbestimmten Wert nicht überschreitet, wenn die Differenz gleich oder größer als der vorbestimmte Schwellwert ist.

**14.** Ein Belichtungskontrollverfahren für eine Videokamera gemäß zumindest einem der Ansprüche 7 bis 10, wobei die Belichtungskontrolle in Übereinstimmung mit einem ersten Durchschnittshelligkeitswert durchgeführt wird, der aus einem näherungsweise gesamten Bereich oder einem speziellen Teilbereich eines Bildaufnahmebereichs erhalten wird, wobei der Bildaufnahmebereich in eine Vielzahl von Bereichen (S1-S5) unterteilt wird, die Durchschnittshelligkeitswerte von jeweiligen Gebieten untereinander verglichen werden, um einen Mehrfachmusterhelligkeitsmesswert zu berechnen, und, wenn der erste Durchschnittshelligkeitswert sich von dem Mehrfachmusterhelligkeitsmesswert um eine Differenz, die gleich oder größer als ein vorbestimmter Schwellwert ist, unterscheidet, der erste Durchschnittshelligkeitswert um einen Korrekturbetrag, der nicht größer als ein vorbestimmter Wert ist, korrigiert wird, und die Belichtungssteuerung in Übereinstimmung mit dem ersten korrigierten Durchschnittshelligkeitswert ausgeführt wird, wobei das Verfahren die Schritte umfasst:

Korrigieren eines früheren Korrekturbetrags in Übereinstimmung mit einer Differenz zwischen einem Korrekturbetrag, der neu während einer kontinuierlichen Szenenaufnahme berechnet wird, und dem früheren Korrekturbetrag, wenn die Differenz gleich oder größer als ein vorbestimmter Schwellwert ist; und

Korrigieren des ersten Durchschnittshelligkeitswertes in Übereinstimmung mit dem korrigierten Korrekturbetrag.

**15.** Ein Belichtungskontrollverfahren für eine Videokamera gemäß zumindest einem der Ansprüche 7 bis 10, wobei aus einer Vielzahl von Bereichen (S1-S5) eines Bildaufnahmebereichs erhaltene Durchschnittshelligkeitswerte untereinander verglichen werden, um eine aus einer Vielzahl von Gleichungen (1-7) mit jeweils einem unterschiedlichen Gewichtungswert, der für den Durchschnittshelligkeitswert jedes Gebietes zu verwenden ist, auszuwählen, und wobei ein zur Belichtungssteuerung zu verwendender Szenenhelligkeitswert in Übereinstimmung mit der ausgewählten Gleichung berechnet wird, wobei das Verfahren den Schritt aufweist:

Berechnung des Szenenhelligkeitswertes, während ein Gewichtungswert für eine früher ausgewählte Gleichung graduell an einen Gewichtungswert für eine neu ausgewählte Gleichung angepasst wird, wenn die neu ausgewählte Gleichung während einer kontinuierlichen Szenenaufnahme sich von der früher ausgewählten Gleichung unterscheidet.

**Revendications**

**1.** Appareil de commande d'exposition possédant :

un capteur d'image (2) servant à prendre une scène et à produire un signal vidéo, et
un moyen d'ajustement servant à ajuster une valeur d'exposition du capteur d'image, ledit moyen d'ajustement comprenant un moyen qui sert à détecter une variation dudit signal vidéo, et

un moyen servant à faire varier la vitesse de commande de l'exposition en fonction de ladite variation dudit signal vidéo,

caractérisé en ce que :

ledit moyen de détection est conçu pour détecter une variation de la continuité d'une scène sur la base de variations de signaux vidéo d'aires différentes (23A, 23B) dans une vue prise (23) dudit capteur d'image (2) ; et ledit moyen de variation de la vitesse de commande d'exposition comprend un diaphragme à iris (5) et est conçu de façon à faire varier pas à pas la vitesse de commande d'exposition en faisant varier la vitesse d'entraînement servant à ajuster ledit diaphragme à iris en réponse à une variation de la continuité d'une scène de façon à entraîner ledit diaphragme à iris à faible vitesse lorsque ladite scène est continue et à entraîner ledit diaphragme à iris à grande vitesse lorsque ladite scène a varié brutalement.

2. Appareil de commande d'exposition selon la revendication 1, où ledit moyen de détection est conçu pour évaluer une variation séquentielle dans le temps desdits signaux vidéo correspondant à au moins deux aires différentes de ladite vue prise.

3. Appareil de commande d'exposition selon au moins l'une des revendications 1 et 2, où ledit moyen de variation de vitesse fait sélectivement commuter ladite vitesse de commande entre deux pas, vitesse faible et vitesse élevée.

4. Appareil de commande d'exposition selon au moins l'une des revendications 1 à 3, où lesdites deux aires différentes sont une aire d'image quasi globale (23B) et une aire centrale de l'image (23A).

5. Appareil de commande d'exposition selon au moins l'une des revendications 2 à 4, où ledit moyen de détection détermine l'existence d'une variation de continuité de ladite scène en évaluant une variation de luminance de l'une des deux aires différentes (23A, 23B) et une variation de luminance de l'autre desdits deux aires différentes (23A, 23B).

6. Appareil de commande d'exposition selon au moins l'une des revendications 2 à 5, où ledit moyen de détection détermine l'existence d'une variation de continuité de ladite scène en évaluant la différence entre la variation de luminance de l'une desdites deux aires différentes (23A, 23B) et la variation de luminance de l'autre desdites deux aires différentes (23A, 23B).

7. Procédé de commande d'exposition pour une caméra vidéo destinée à prendre une scène avec un capteur d'image (2) convertissant une image optique en signaux vidéo, où :

on ajuste la valeur de l'exposition du capteur d'image sur la base de la détection d'une variation de la valeur de lumination desdits signaux vidéo, et

on fait varier la vitesse de commande de la valeur d'exposition en fonction de ladite variation,

caractérisé par les opérations suivantes :

déterminer une variation de continuité de ladite scène sur la base de variations des signaux vidéo d'aires différentes (23A, 23B) dans une vue prise (23) dudit capteur d'image (2), et

faire varier pas à pas la vitesse de commande de la valeur de l'exposition en faisant varier en conséquence la vitesse d'entraînement permettant d'ajuster un diaphragme à iris placé en avant dudit capteur d'image, en réponse à ladite variation de la continuité de la scène, de façon à entraîner ledit diaphragme à iris à faible vitesse lorsque ladite scène est continue et à entraîner ledit diaphragme à iris à grande vitesse lorsque ladite scène a varié.

8. Procédé de commande d'exposition selon la revendication 7, comprenant les opérations supplémentaires suivantes :

mesurer des valeurs de luminance moyennes respectives d'une pluralité d'aires (S1 à S5) en fonction de signaux vidéo correspondant auxdites aires respectives en divisant une vue prise dudit capteur d'image (2) en ladite pluralité d'aires (S1 à S5) ;

sélectionner une équation parmi une pluralité d'équations (1 à 7) ayant chacune une pondération différente en comparant lesdites valeurs de luminance moyennes desdites aires respectives ;

calculer une valeur de luminance de la scène en utilisant ladite équation sélectionnée ; et

déterminer la vitesse de commande d'exposition en fonction de l'amplitude de variation desdites valeurs de luminance de la scène et selon la présence d'une continuité entre aspects de ladite scène.

**9.** Procédé de commande d'exposition selon la revendication 7, comprenant les opérations suivantes :

mesurer périodiquement des valeurs de luminance moyennes respectives d'une pluralité d'aires (S1 à S5) en fonction de signaux vidéo correspondant auxdites aires respectives en divisant la vue prise dudit capteur d'image (2) en ladite pluralité d'aires (S1 à S5) ;
sélectionner une équation parmi une pluralité d'équations (1 à 7) ayant chacune une pondération différente en comparant lesdites valeurs de luminance moyennes desdites aires respectives (S1 à S5) ;
déterminer l'équation la plus fréquemment sélectionnée parmi les équations sélectionnées pendant une période prédéterminée ;
calculer une valeur de luminance de la scène pour chaque mesure en utilisant ladite équation déterminée qui doit être utilisée jusqu'à ce qu'une autre détermination soit faite ; et
ajuster la valeur de l'exposition dudit capteur d'image (2) en fonction de ladite valeur de luminance de la scène.

**10.** Procédé de commande d'exposition selon la revendication 7, comprenant les opérations suivantes :

mesurer périodiquement les valeurs de luminance moyennes respectives d'une pluralité d'aires (S1 à S5) en fonction de signaux vidéo correspondant auxdites aires respectives en divisant la vue prise dudit capteur d'image (2) en ladite pluralité d'aires (S1 à S5) ;
calculer une valeur de luminance de la scène à chaque mesure en fonction de la sélection d'une équation parmi une pluralité d'équations (1 à 7) ayant chacune une pondération différente en comparant lesdites valeurs de luminance moyennes desdites aires respectives ;
obtenir la valeur moyenne de la valeur de luminance de la scène sélectionnée pendant une période prédéterminée ; et
ajuster la valeur de l'exposition dudit capteur d'image en fonction de ladite valeur moyenne.

**11.** Procédé de commande d'exposition pour une caméra vidéo selon au moins l'une des revendications 7 à 10, où on divise une vue prise en une pluralité d'aires (S1 à S5) et, si la valeur de luminance moyenne de l'aire centrale (S1) de la vue prise est supérieure à la valeur de luminance moyenne de l'aire périphérique de la vue prise, alors la valeur de luminance de la scène utilisée pour la commande de l'exposition est calculée par une mesure pondérée centralement, ledit procédé comprenant les opérations suivantes :

déterminer que, si la valeur de luminance moyenne de ladite aire centrale (S1) est supérieure à la valeur de luminance moyenne de ladite aire périphérique d'une différence qui est plus grande qu'une valeur de seuil prédéterminée et si la dimension de l'ouverture d'un diaphragme (5) est petite, alors une lumière anormale est présente à l'intérieur de ladite aire centrale (S1); et
corriger ladite valeur de luminance de la scène de façon à empêcher que ladite aire périphérique ne soit trop sombre lorsqu'il a été déterminé que ladite lumière anormale était présente.

**12.** Procédé de commande d'exposition pour une caméra vidéo selon au moins l'une des revendications 7 à 10, où on divise une vue prise en une pluralité d'aires (S1 à S5) et, si la valeur de luminance moyenne d'une aire centrale (S1) de la vue prise est supérieure à la valeur de luminance moyenne de l'aire périphérique de la vue prise, alors la valeur de luminance de la scène utilisée pour la commande de l'exposition est calculée par une mesure pondérée centralement, ledit procédé comprenant les opérations suivantes :

déterminer, en comparant une valeur de luminance moyenne normalisée de ladite aire centrale (S1) avec une valeur de luminance moyenne normalisée de ladite aire périphérique, qu'une lumière anormale est présente à l'intérieur de ladite aire centrale si la différence entre lesdites valeurs de luminance moyennes normalisées est plus grande qu'une valeur de seuil prédéterminée, lesdites valeurs de luminance moyennes normalisées ayant été obtenues par considération des informations relatives au diaphragme ; et
corriger ladite valeur de luminance de la scène de façon à empêcher que ladite aire périphérique ne soit trop sombre lorsqu'il a été déterminé que ladite lumière anormale était présente.

**13.** Procédé de commande d'exposition pour une caméra vidéo selon au moins l'une des revendications 7 à 10, où on divise une vue prise en une pluralité d'aires (S1 à S5) afin d'obtenir des valeurs de luminance moyennes d'aires respectives, on compare les valeurs de luminance moyennes entre elles afin de sélectionner une équation parmi une pluralité d'équations (1 à 7) ayant chacune une valeur de pondération différente, et on calcule une valeur de luminance mesurée multi-modèle en fonction de l'équation sélectionnée, ledit procédé comprenant les opérations suivantes :

obtenir une première valeur de luminance moyenne à partir d'une aire partielle spécifique ou de l'aire globale de ladite vue prise en même temps qu'on obtient ladite valeur de luminance mesurée multi-modèle ;

déterminer si ladite première valeur de luminance moyenne est différente de ladite valeur de luminance mesurée multi-modèle d'une différence égale ou supérieure à une valeur de seuil prédéterminée ; et

exécuter une commande d'exposition en fonction d'une valeur de luminance moyenne corrigée sur la base de la correction de ladite première valeur de luminance moyenne d'une quantité qui n'est pas en excès d'une valeur prédéterminée si ladite différence est égale ou supérieure à ladite valeur de seuil prédéterminée.

14. Procédé de commande d'exposition pour une caméra vidéo selon au moins l'une des revendications 7 à 10, où on exécute la commande d'exposition selon une première valeur de luminance moyenne obtenue à partir d'une aire quasi globale ou d'une aire partielle spécifique d'une vue prise, on divise la vue prise en une pluralité d'aires (S1 à S5), on compare les valeurs de luminance moyennes d'aires respectives entre elles afin de calculer une valeur de luminance mesurée multi-modèle et, si la première valeur de luminance moyenne est différente de la valeur de luminance mesurée multi-modèle d'une différence qui est égale ou supérieure à une valeur de seuil prédéterminée, on corrige la première valeur de luminance moyenne d'une quantité de correction qui n'est pas en excès d'une valeur prédéterminée, et on exécute la commande d'exposition en fonction de la première valeur de luminance moyenne corrigée, ledit procédé comprenant les opérations suivantes :

corriger une quantité de correction antérieure en fonction de la différence entre une quantité de correction nouvellement calculée pendant une prise de scène continue et ladite quantité de correction antérieure si ladite différence est égale ou supérieure à une valeur de seuil prédéterminée ; et

corriger ladite première valeur de luminance moyenne en fonction de ladite quantité de correction corrigée.

15. Procédé de commande d'exposition pour une caméra vidéo selon au moins l'une des revendications 7 à 10, où on compare entre elles des valeurs de luminance moyennes obtenues à partir d'une pluralité d'aires (S1 à S5) d'une vue prise afin de sélectionner une équation parmi une pluralité d'équations (1 à 7) ayant chacune une valeur de pondération différente devant être utilisée pour la valeur de luminance moyenne de chaque aire, et on calcule une valeur de luminance de la scène à utiliser pour la commande d'exposition en fonction de l'équation sélectionnée, le procédé comprenant l'opération suivante :

calculer ladite valeur de luminance de la scène tout en faisant qu'une valeur de pondération relative à une équation antérieurement sélectionnée se rapproche graduellement d'une valeur de pondération relative à une nouvelle équation sélectionnée si ladite nouvelle équation sélectionnée pendant une prise de scène continue est différente de ladite équation antérieurement sélectionnée.

F I G . 1

# F I G . 2

# F I G . 3

$$D_1 = \log(I_{A1}/I_{B1})$$

$$D_0 = \log(I_{A0}/I_{B0})$$

BRIGHTNESS
VALUE(EV)

$I_{A0}$

$I_{A1}$

$|I_{A1} - I_{A0}| = K_1$

$I_A$

$I_B$

$I_{B1}$

$|I_{B1} - I_{B0}| = K_2$

$I_{B0}$

$\Delta T$

0    $T_0$      $T_1$

TIME

# F I G . 4

```
        ╭─────────────────────╮
        │   IRIS DIAPHRAGM    │
        │      CONTROL        │
        ╰─────────────────────╯
                 │
     ┌─────────────────────────┐
     │  DIVIDED BRIGHTNESS     │
     │      MEASURING          │    DETECT Iₐ,I_B
     └─────────────────────────┘
```

DETECT $I_A$, $I_B$

```
     ┌─────────────────────────┐
     │   HIGH SPEED CONTROL    │    AVERAGED BRIGHTNESS
     │ OF IRIS DIAPHRAGM BY I_B │   MEASURING MODE
     └─────────────────────────┘
```

AVERAGED BRIGHTNESS MEASURING MODE

$|D| > Th_D$ ?   NO / YES

SET FLAG $F_c$

HIGH SPEED CONTROL OF IRIS DIAPHRAGM BY $I_A$   CENTER WEIGHTED MEASURING MODE

LAPSE OF $\Delta T$

DIVIDED BRIGHTNESS MEASURING   DETECT $I_A$, $I_B$

$K_1 = ||I_{A1} - I_{A0}|$
$K_2 = ||I_{B1} - I_{B0}|$

FLAG $F_c$ SET ?   NO / YES

STATE (3) ?   NO / YES

RESET FLAG $F_c$

STATE (2-A) OR (4) ?   NO / YES

STATE (7) ?   YES / NO

HIGH SPEED CONTROL OF IRIS DIAPHRAGM BY $I_A$

HIGH SPEED CONTROL OF IRIS DIAPHRAGM BY $I_B$

# FIG. 5

EP 0 409 161 B1

# F I G . 6

IRIS DIAPHRAGM CONTROL

DIVIDED BRIGHTNESS MEASURING

HIGH SPEED CONTROL OF IRIS DIAPHRAGM BY $I_B$

LAPSE OF $\Delta T$

DIVIDED BRIGHTNESS MEASURING

$$K = |I_{A1} - I_{A0}| - |I_{B1} - I_{B0}|$$

$|K| \geq Th_k$ ?

NO

YES

SET IRIS DIAPHRAGM CONTROL AT HIGH SPEED

SET IRIS DIAPHRAGM CONTROL AT LOW SPEED

CONTROL IRIS DIAPHRAGM BY $I_{B1}$

# F I G . 7

EP 0 409 161 B1

# F I G . 8

IRIS DIAPHRAGM
CONTROL

DIVIDED BRIGHTNESS
MEASURING

$|D| > Th_D$ ? — NO → HIGH SPEED IRIS
DIAPHRAGM CONTROL
BY $I_B$

YES

$|v| \gtrless Th_v$ ? — YES

NO

HIGH SPEED IRIS
DIAPHRAGM CONTROL
BY $I_A$

LOW SPEED IRIS
DIAPHRAGM CONTROL
BY $I_B$

35

# F I G . 9

X-DIRECTION
DISPLACEMENT
OF VIDEO CAMERA

Ta    Tb Tc Td    Te

OUTPUT FROM
ACCELERATION
SENSOR

Thv

−Thv

IRIS
DIAPHRAGM
CONTROL
SPEED

HIGH
SPEED

LOW
SPEED

F I G . 10

# F I G . 11

# FIG.12

START

A/D CONVERSION

CLIP HIGH/LOW BRIGHTNESS

DIVIDE IMAGE

CALCULATE AVERAGE BRIGHTNESS VALUE OF EACH AREA

CALCULATE BRIGHTNESS DIFFERENCES $D_0, D_1, D_2, D_3$

$|D_0| \geqq Th_0$ ? — NO / YES — J10

$|D_1| \geqq Th_1$ ? — NO / YES — J11

$|D_2| \geqq Th_2$ ? — NO / YES — J12

$|D_2| \geqq Th_2$ ? — NO / YES — J13

$|D_3| \geqq Th_3$ ? — NO / YES — J14

$|D_3| \geqq Th_3$ ? — NO / YES — J15

SELECT EQUATION (1)

SELECT EQUATION (2)

SELECT EQUATION (3)

SELECT EQUATION (4)

SELECT EQUATION (5)

SELECT EQUATION (6)

SELECT EQUATION (7)

CHANGE AMOUNT OF AVERAGED BRIGHTNESS $B_{1234}$ IS LARGER THAN THRESHOLD VALUE $Th_4$ ? — YES / NO

SAME AS PREVIOUS EQUATION ? — YES / NO

HIGH SPEED IRIS DIAPHRAGM CONTROL

LOW SPEED IRIS DIAPHRAGM CONTROL

EP 0 409 161 B1

# FIG.13A

# FIG.13B

# FIG.13C

# FIG.13D

# FIG.13E

# FIG.13F

# FIG.13G

# F I G . 14

EP 0 409 161 B1

# F I G . 15

EP 0 409 161 B1

# F I G . 16

TIMER

MEASURING

SELECTION
OF
EQUATION

(1)
(2)
(3)
(4)
(5)
(6)
(7)

DETERMINATION
OF EQUATION

EP 0 409 161 B1

# F I G . 17

START OF TAKING

MEASURING

SELECTION OF EQUATION

(1)
(2)
(3)
(4)
(5)
(6)
(7)

DETERMINATION OF EQUATION

(1)          (3) (3) (3) (6) (6)

EP 0 409 161 B1

# F I G . 18

START

TIMER ON

A/D
CONVERSION

CLIP HIGH/LOW
BRIGHTNESS

DIVIDE IMAGE

CALCULATE
AVERAGE
BRIGHTNESS
VALUE OF
EACH AREA

CALCULATE
BRIGHTNESS
DIFFERENCES
$D_0, D_1, D_2, D_3$

$|D_0| \geq Th_0$ ?    NO

YES    J10

J11    $|D_1| \geq Th_1$ ?    NO

J12    YES

$|D_2| \geq Th_2$ ?    NO

YES

J13    $|D_2| \geq Th_2$ ?    NO

YES    J14

$|D_3| \geq Th_3$ ?    NO

YES

J15    $|D_3| \geq Th_3$ ?    NO

YES

SELECT
EQUATION
(1)

SELECT
EQUATION
(2)

SELECT
EQUATION
(3)

SELECT
EQUATION
(4)

SELECT
EQUATION
(5)

SELECT
EQUATION
(6)

SELECT
EQUATION
(7)

CALCULATE BRIGHTNESS
VALUE BY MULTI-PATTERN
MEASURING

STORE BRIGHTNESS
VALUE BY MULTI-PATTERN
MEASURING

NO    TIMER OFF ?

YES

CALCULATE AVERAGE
VALUE OF BRIGHTNESS
VALUES BY
MULTI-PATTERN MEASURING

CONTROL IRIS DIAPHRAGM

EP 0 409 161 B1

# F I G . 19

AMPLIFIER 7

VIDEO SIGNAL PROCESSING CIRCUIT 8

RECORDING APPARATUS 9

3

5

2

52

HALL ELEMENT

IRIS DIAPHRAGM DRIVER 79

DRIVER 54

A/D 40

CLIPPING CIRCUIT 41

A/D 53

D/A 72

43

OVERALL AVERAGE IMAGE BRIGHTNESS CALCULATION UNIT 78

DIVIDED BRIGHTNESS MEASURING UNIT 60

CORRECTING UNIT 77

ABNORMAL LIGHT JUDGING UNIT 76

CALCULATION UNIT 75

EP 0 409 161 B1

# FIG.20

START

DETECT AVERAGE BRIGHTNESS VALUE $C_0$

CLIP HIGH/LOW BRIGHTNESS

DIVIDE IMAGE

CALCULATE AVERAGE BRIGHTNESS VALUE OF EACH AREA

CALCULATE BRIGHTNESS DIFFERENCES $D_0, D_1, D_2, D_3$

$|D_0| \geqq Th_0$ ? — NO / YES

J10

J11

$|D_1| \geqq Th_1$ ? — NO / YES

J12

$|D_2| \geqq Th_2$ ? — NO / YES

J13

$|D_2| \geqq Th_2$ ? — NO / YES

J14

$|D_3| \geqq Th_3$ ? — NO / YES

J15

$|D_3| \geqq Th_3$ ? — NO / YES

CALCULATE $C_1$ BY EQUATION (1)

CALCULATE $C_2$ BY EQUATION (2)

CALCULATE $C_3$ BY EQUATION (3)

CALCULATE $C_4$ BY EQUATION (4)

CALCULATE $C_5$ BY EQUATION (5)

CALCULATE $C_6$ BY EQUATION (6)

CALCULATE $C_7$ BY EQUATION (7)

$\log(C_2/C_7)/\log 2 > Th$ ? — NO / YES

SMALL DIAMETER OF IRIS DIAPHRAGM ? — NO / YES

SELECT BRIGHTNESS VALUE $C_7$ BY MULTI-PATTERN MEASURING

CORRECT BRIGHTNESS VALUE BY MULTI-PATTERN MEASURING

CONTROL IRIS DIAPHRAGM

EP 0 409 161 B1

# F I G . 21

# FIG.22

82

$S_6$

$S_7$

# FIG.23

CENTER
WEIGHTED
BRIGHTNESS
MEASURING

AVERAGED
BRIGHTNESS
MEASURING

0   Th_5   Th_6   Th_7   Th_8

BRIGHTNESS
DIFFERENCE
$\Delta B$

# F I G . 2 4

START

MEASURE BRIGHTNESS

$Th_6 \leq \Delta B \leq Th_8$ ? — NO

YES

CONTROL IRIS DIAPHRAGM BY $B_6$

MEASURE BRIGHTNESS

$\Delta B > Th_8$ ? — YES

NO

$\Delta B < Th_5$ ? — NO

YES

CONTROL IRIS DIAPHRAGM BY $B_7$

CONTROL IRIS DIAPHRAGM BY $B_7$

MEASURE BRIGHTNESS

$\Delta B > Th_8$ ? — NO

YES

CONTROL IRIS DIAPHRAGM BY $B_7$

MEASURE BRIGHTNESS

$Th_5 \leq \Delta B \leq Th_7$ ? — NO

YES

NO

CONTROL IRIS DIAPHRAGM BY $B_7$

CONTROL IRIS DIAPHRAGM BY $B_7$

MEASURE BRIGHTNESS

$\Delta B > Th_7$ ? — YES

NO

CONTROL IRIS DIAPHRAGM BY $B_7$

EP 0 409 161 B1

F I G . 25

# F I G . 26

START

CLIP HIGH/LOW BRIGHTNESS

DIVIDED BRIGHTNESS MEASURING AND OVERALL IMAGE AVERAGED BRIGHTNESS MEASURING

CALCULATE AVERAGE BRIGHTNESS VALUE OF EACH AREA AND OVERALL AREA

CALCULATE BRIGHTNESS DIFFERENCES $D_0, D_1, D_2, D_3$

$|D_0| \geq Th_0$ ? — NO / YES

$|D_1| \geq Th_1$ ? — NO / YES

$|D_2| \geq Th_2$ ? — NO / YES    J13

$|D_3| \geq Th_3$ ? — NO / YES    J15

$|D_2| \geq Th_2$ ? — NO / YES    J12

$|D_3| \geq Th_3$ ? — NO / YES    J14

J10
J11

SELECT EQUATION (1)

SELECT EQUATION (2)

SELECT EQUATION (3)

SELECT EQUATION (4)

SELECT EQUATION (5)

SELECT EQUATION (6)

SELECT EQUATION (7)

CALCULATE BRIGHTNESS VALUE C BY MULTI-PATTERN MEASURING

$|C - C_0| > 1$ ? — NO

SELECT BRIGHTNESS VALUE C BY MULTI-PATTERN MEASURING

CORRECT OVERALL IMAGE AVERAGED BRIGHTNESS VALUE $C_0$

CONTROL IRIS DIAPHRAGM

EP 0 409 161 B1

# F I G . 27

# F I G . 28

EP 0 409 161 B1

# FIG. 29

EP 0 409 161 B1

# F I G . 3 0

# F I G . 31

F I G . 3 2

# F I G . 3 3

BRIGHTNESS
MEASURING

WEIGHTING
VALUE

EP 0 409 161 B1